# EUROPÄISCHE PATENTSCHRIFT

(11) **EP 3 235 074 B1**
(45) Veröffentlichungstag und Bekanntmachung des Hinweises auf die Patenterteilung: **05.02.2020**
(21) Anmeldenummer: 15813325.6
(22) Anmeldetag: 14.12.2015
(51) Int. Cl.: H01R 43/042, B25B 7/04, B25B 27/14, F16H 55/14

(54) **PRESSZANGE**
CRIMPING PLIERS
PINCE DE COMPRESSION

(30) Priorität: 17.12.2014 DE 102014118858; 28.04.2015 DE 102015106562
(43) Veröffentlichungstag der Anmeldung: 25.10.2017
(73) Patentinhaber: Gustav Klauke GmbH, 42855 Remscheid (DE)
(72) Erfinder: FRENKEN, Egbert, 52525 Heinsberg (DE)
(74) Vertreter: Müller, Enno
(86) Internationale Anmeldenummer: PCT/EP2015/079599
(87) Internationale Veröffentlichungsnummer: WO 2016/096732

(56) Entgegenhaltungen:
- WO-A2-2009/114477
- DE-A1- 1 465 239
- DE-A1- 2 841 588
- DE-A1- 19 628 752
- DE-U1- 8 029 841
- DE-U1- 20 217 733
- JP-A- H0 518 455
- JP-A- 2012 101 340
- US-A- 2 838 970
- US-A- 3 085 313
- US-A- 3 733 627
- US-A- 4 677 702
- US-A- 4 825 682
- US-B1- 7 536 896

## Beschreibung

Die Erfindung betrifft eine Presszange, insbesondere zum Aufpressen von Kabelschuhen oder dergleichen auf elektrische Leiter, mit zwei gegeneinander verschwenkbaren Pressbacken, wobei in jeder Pressbacke jeweils eine über einen Umfang bezüglich einer Drehachse mit mehreren unterschiedlichen Pressmulden ausgebildete Pressmatrize drehbar gelagert ist.

Presszangen der in Rede stehenden Art sind bekannt, dies sowohl als handbetätigte wie auch als motorbetriebene Werkzeuge. Diese werden bspw. dazu verwendet, Kabelschuhe auf elektrischen Leitern zu befestigen. Hierzu wird ein insbesondere rohrförmiges Werkstück zwischen den beiden Pressbacken mit bspw. sechseckigen Pressmulden der Pressmatrizen zusammengedrückt. Für jeden Kabelquerschnitt ist dabei in der Regel ein anderes Pressprofil, d.h. ein anderer Öffnungsquerschnitt der Pressmulden beider Pressmatrizen erforderlich. Eine entsprechende Anpassung der Pressmatrizen erfolgt bei bekannten Zangen durch Drehverlagerung derselben um ihre Drehachse, wobei die Pressmulden beider Pressmatrizen zur ordnungsgemäßen Verpressung des Werkstückes aufeinander abgestimmt sein müssen.

Eine solche Presszange ist bspw. aus der DE 19 628 752 B4 bekannt.

Im Hinblick auf den bekannten Stand der Technik stellt sich der Erfindung die Aufgabe, eine Presszange der in Rede stehenden Art insbesondere hinsichtlich der Handhabung weiter zu verbessern.

Diese Aufgabe ist beim Gegenstand des Anspruches 1 gelöst, wobei darauf abgestellt ist, dass die Pressmatrizen unabhängig von einer Schwenkstellung der Pressbacken ständig getriebemäßig gekoppelt sind.

Durch die getriebemäßige Kopplung der Pressmatrizen hat die Drehverstellung einer Pressmatrize zur Verlagerung einer gewünschten Pressmulde in die Arbeitsstellung automatisch eine entsprechende Verstellung der anderen Pressmatrize zufolge. Die Verstellung beider Pressmatrizen erfolgt synchron. Das Koppelgetriebe ist hierbei bevorzugt so ausgelegt, dass stets zueinander gehörende Pressmulden beider Pressmatrizen bei Verstellung einer Pressmatrize in die jeweilige Arbeitsstellung gelangen.

Die getriebemäßige Kopplung der Pressmatrizen ist unabhängig von der Schwenkstellung der Pressbacken stets gegeben, d.h. bevorzugt sowohl in der maximalen Pressbacken-Offenstellung, wie auch in der Pressbacken-Schließstellung und darüber hinaus bevorzugt auch in jeder Zwischenstellung zwischen der Offenstellung und der Schließstellung. Die Kopplung der Pressmatrizen geht so nicht im Zuge der Schwenkverlagerung der Pressbacken verloren. Die über die Kopplung bevorzugt gegebene Zuordnung von für die vorgesehene Verpressung zugehörigen Pressmulden bleibt stets erhalten, bevorzugt bis zu einer willensbetonten Änderung zufolge Drehverlagerung einer Pressmatrize.

Über die getriebemäßige Kopplung kann eine Über- oder Untersetzung erreicht sein.

Eine Matrize kann mittels eines Getrieberades quer zu der Drehachse bewegbar sein. Durch die Querverlagerung kann eine Formschlusssicherung der Pressmatrize in der Arbeitsstellung aufgehoben sein. Weiter kann eine in Bezug zur Drehachse radiale Verlagerung der Pressmatrize einhergehen mit der Drehverlagerung der Pressmatrize zur Einstellung einer anderen Pressmulde in die Arbeitsstellung.

So kann weiter vorgesehen sein, dass eine Pressmatrize mittels eines Getrieberades aus einer ersten durch Formschluss gesicherten Pressstellung in eine zweite durch Formschluss gesicherte Pressstellung bewegbar ist.

Eine Pressmatrize kann zur Versetzung einer anderen Pressmulde in eine Arbeitsstellung mittels einer Getriebeeinwirkung gegen eine die Pressmatrize in eine formschlussgesicherte Arbeitsstellung beaufschlagende Kraft unter einer Bewegung quer zu ihrer Drehachse verstellbar sein. Die Kraft, die die Pressmatrize in die formschlussgesicherte Arbeitsstellung belastet kann aus einer mittelbar oder unmittelbar auf die Pressmatrize einwirkenden Feder resultieren. Hierbei kann es sich um eine übliche Zylinderfeder in Art einer Druck- oder Zugfeder handeln; alternativ bspw. auch um eine Schenkelfeder. Darüber hinaus kann die Kraft auch resultieren aus einem federnden Element in Form eines elastisch rückstellfähigen Kunststoffes oder dergleichen.

Die getriebemäßige Kopplung kann über ständig in Eingriff befindliche Zahnräder gegeben sein. Durch eine bevorzugte Anordnung solcher Zahnräder koaxial zu den Schwenkachsen der Pressbacken, ist eine ständige Kopplung der Zahnräder unabhängig von der Pressbacken-Schwenkstellung erreichbar.

Auch kann eine ständige getriebemäßige Kopplung durch unmittelbare oder mittelbare Verbindung der Pressmatrizen über einen Transmissionsriemen gegeben sein, weiter insbesondere über mindestens einen elastischen Riemen.

Es wird auch vorgeschlagen, dass die Pressmatrize zur Aufhebung der Formschlussstellung quer zu ihrer Drehachse bewegbar ist.

Bei den aus dem Stand der Technik bekannten Lösungen werden die Pressmatrizen zur Aufhebung der Formschlussstellung entlang ihrer Drehachse verlagert, um hiernach insbesondere zufolge einer dann freigegebenen Drehverlagerbarkeit der Pressmatrize eine andere Pressmulde in Arbeitsstellung verbringen zu können.

Die vorgeschlagene Lösung sieht hier eine bezogen auf die Drehachse radiale Bewegung der Pressmatrize zur Aufhebung der Formschlussstellung vor. Hieraus ergibt sich eine günstigere Handhabung. Die Bewegung quer zur Drehachse zur Aufhebung der Formschlussstellung kann einhergehen mit der Drehverlagerung der Pressmatrize zur Einstellung der Pressmulde. Die Querverlagerung kann dabei abgeleitet sein aus der Drehverlagerung. Die Drehverlagerung kann eine Querverlagerung der Pressmatrize erzwingen.

Zur Querverlagerbarkeit der Pressmatrize kann ein die Drehachse aufnehmender und die Pressmatrize tragender Bolzen oder dergleichen in einem Langloch geführt sein.

Eine Pressmulde der Pressmatrize ist bevorzugt durch zahnartige Vorsprünge gebildet, welche zahnartigen Vorsprünge insbesondere die Pressmulde in Umfangsrichtung der Pressmatrize flankieren. Jeder Vorsprung kann auf einer Außenseite der Pressmulde eine in einer Arbeitsstellung einer Pressmulde mit einem Formschlussmittel in Eingriff bringbare Beaufschlagungsfläche aufweisen, wobei in Richtung radial zu einer Drehachse betrachtet die mit der Formschlussfläche in Eingriff gebrachte Beaufschlagungsfläche bzgl. einer durch die Drehachsen der gegenüberliegenden Pressmatrizen oder parallel hierzu verlaufende Geraden einen spitzen Winkel einschließt. Dieser spitze Winkel kann bspw. 5 bis 45 Grad betragen, weiter bspw. 15 bis 30 Grad.

Die Beaufschlagungsfläche des zahnartigen Vorsprungs wirkt bevorzugt zusammen mit einer entsprechend in demselben spitzen Winkel verlaufenden Formschlussfläche des Formschlussmittels. Formschlussfläche und Beaufschlagungsfläche können in der Formschlussstellung aneinander anliegen, insbesondere plan aneinander anliegen.

Das Formschlussmittel mit der Formschlussfläche ist bevorzugt fest und somit nicht verlagerbar an der der Pressmatrize zugeordneten Pressbacke befestigt.

Die in Eingriff befindliche Beaufschlagungsfläche einer Pressmulde kann zu einer bezüglich der Drehachse der Pressmatrize gegenüberliegenden Pressmulde, die sich in Arbeitsstellung befindet, gehören. Es kann so eine quasi rückwärtige Formschlussabstützung der Pressmatrize im Bereich der Formschlussmittel erreicht sein. Bei einer zur Verstellung drehbaren Pressmatrize sind über den Umfang verteilt mehrere, unterschiedlich ausgebildete Pressmulden vorgesehen, die in Umfangsrichtung zueinander beabstandet sind durch zahnartige Vorsprünge.

Bezüglich der vorbeschriebenen Geraden können zwei gegenüberliegende Beaufschlagungsflächen vorgesehen sein. Diese Beaufschlagungsflächen sind bevorzugt an den die Pressmulde in Umfangsrichtung begrenzenden Vorsprüngen ausgebildet, wobei die Beaufschlagungsflächen mit Bezug auf die Gerade voneinander abweisend angeordnet sein können.

Im Falle der Ausbildung von zwei gegenüberliegenden Beaufschlagungsflächen sind bevorzugt auch zwei mit diesen Beaufschlagungsflächen zusammenwirkende Formschlussflächen vorgesehen.

Auch können die spitzen Winkel beider Beaufschlagungsflächen und/oder beider Formschlussflächen gleich sein.

Zufolge einer bevorzugten Dreheinwirkung auf die Pressmatrize gleitet die in Drehrichtung der Pressmatrize vorlaufende Beaufschlagungsfläche auf der zugeordneten Formschlussfläche des Formschlussmittels ab. Dies führt zu einer Verlagerung der Pressmatrize in eine Richtung quer zu ihrer Drehachse bis die Beaufschlagungsfläche die Formschlussfläche verlässt und der Formschlusseingriff hierdurch zumindest vorläufig aufgehoben ist.

Die Formschlussfläche, auf welcher die matrizenseitige Beaufschlagungsfläche abgleiten kann, kann eine Gleitfläche, bspw. in Form einer Einweiserschräge ausbilden, wodurch die Matrize bei einer Drehung um ihre Drehachse in eine anschlagbegrenzte Drehend- bzw. Formschlussstellung bringbar ist. Insbesondere in Zusammenwirkung mit einer auf die Matrize in ihre Grundstellung einwirkenden Federkraft ist so einem möglichen ungewollten Verbleib in der Totpunktstellung entgegengewirkt. Vielmehr gleitet der Matrizenvorsprung an der bezogen auf eine Draufsicht ansteigenden bzw. abfallenden Gleitfläche ab, wonach insbesondere durch Federkraft eine selbsttätige Drehverlagerung in die Formschlussstellung erreicht wird.

Die Gleitfläche kann mit Bezug auf eine Draufsicht einen kurvenförmigen Randkantenverlauf aufweisen. Die Kurve errechnet sich aus den Reibparametern von Pressmatrize und Formschlussflächen des Formschlussmittels, sodass eine Selbsthemmung aufgrund dieser Reibpaarung ausgeschlossen ist. Die zusammenwirkenden Flächen von Pressmatrize und Gleitflächen treffen in einem Winkel (bezogen auf eine Draufsicht) aufeinander, der bevorzugt größer ist als 4 Grad.

Bevorzugt sind zwei gegensinnig gerichtete Einweiserschrägen vorgesehen, die mit Bezug auf eine Draufsicht auf die Matrizen und Formschlussmittel, in welcher Draufsicht die Matrizen-Drehachsen sich als Punkte darstellen, einen dachartigen Verlauf der Formschlussfläche bilden.

Insbesondere wenn beide Beaufschlagungsflächen und Formschlussflächen gleiche Winkel aufweisen, ist der vorbeschriebene Effekt in beiden Drehrichtungen der Pressmatrize herbeiführbar. Durch Veränderung des spitzen Winkels einer der beiden Beaufschlagungsflächen und/oder einer der beiden Formschlussflächen, insbesondere hin zu einem spitzeren Winkel, weiter bis hin zu einer Parallelausrichtung zu der Geraden, kann eine Verstell- Drehrichtung für die Pressmatrize vorgegeben sein.

Eine Pressmatrize kann zur Verstellung nur gegen Federkraft aus der Formschlussstellung herausbewegbar sein. Zumindest diese Federkraft muss überwunden werden zur Verstellung der Pressmatrize.

Die Federkraft wirkt bevorzugt quer zur Ausrichtung der Drehachse der Pressmatrize auf die Pressmatrize oder einen die Pressmatrize führenden Bolzen oder dergleichen ein. Die Feder wirkt hierbei derart, dass die Pressmatrize unmittelbar oder mittelbar in die Formschlussstellung belastet ist.

Die Federkraft und/oder der spitze Winkel im Bereich der Beaufschlagungsfläche und/oder der Formschlussfläche kann so gewählt sein, dass eine unmittelbare von-Hand-Verstellung einer Pressmatrize ermöglicht ist, d.h. insbesondere eine übersetzungsfreie Drehverlagerung der Pressmatrize zufolge Handangriff an der Pressmatrize oder einen unmittelbar mit der Pressmatrize verbundenen Stellteil.

Auch kann die Federkraft und/oder der spitze Winkel so gewählt sein, dass nur eine Getriebeverstellung ermöglicht ist. Bei einer solchen Getriebeverstellung ist bevorzugt eine Übersetzung vorgesehen, sodass mit üblicher Handkraft auch größere Federkräfte und/oder Reibkräfte zwischen der Beaufschlagungsfläche und der Formschlussfläche überwunden werden können.

Eine Presszange, insbesondere zum Aufpressen von Kabelschuhen oder dergleichen auf elektrische Leiter, mit zwei gegeneinander verschwenkbaren Pressbacken, kann in jeder Pressbacke jeweils eine über einen Umfang bezgl. einer Drehachse drehbar gelagerte Pressmatrize mit mehreren unterschiedlichen, daran ausgebildeten Pressmulden aufweisen. Es können Zeichen, insbesondere Ziffern vorgesehen sein, welche die unterschiedlichen Pressmulden kennzeichnen.

Bezüglich der Zeichen handelt es sich üblicherweise um Verpress- Nennweiten der zugeordneten Pressmulden. Diesbezüglich ist bekannt, diese Zeichen unmittelbar in die Pressmatrizen, bspw. im Bereich von, die Pressmulden flankierenden zahnartigen Vorsprüngen, einzugravieren.

Es kann vorgesehen sein, dass die Zeichen auf einem von der Pressmatrize gesonderten Teil angebracht sind, das bei einer Verpressung keiner Presskraft ausgesetzt ist und aus einem zu einem Werkstoff der Pressmatrize unterschiedlichen Werkstoff besteht.

Das übliche Eingravieren der Zeichen in die hoch belastbaren Pressmatrizen erweist sich als aufwändig. Oft werden diese Zeichen von Hand eingraviert. Die Anordnung der Zeichen auf einem von der Matrize gesonderten und bei der Verpressung nicht der Presskraft ausgesetzten Teil bietet Vorteile insbesondere in der Wahl des Teilewerkstoffes wie auch in der Wahl der Aufbringung der Zeichen auf das Teil. Der Werkstoff kann weniger hochwertig gewählt sein als die Pressmatrize. So kann das Teil bspw. aus einem üblichen Stahlwerkstoff bestehen, darüber hinaus aber auch bspw. aus Aluminium, Kunststoff bis hin zu Pappe oder Papier.

Die Zeichen können auf das gesonderte Teil in einfachster Weise aufgedruckt sein. Auch können die Zeichen bspw. als Selbstklebefolie aufgeklebt sein.

Das gesonderte Teil kann mit der Pressmatrize fest verbunden sein. So kann das gesonderte Teil mit der Pressmatrize bspw. verklebt oder verschraubt sein.

In einer Ausgestaltung kann das gesonderte Teil koaxial zu der Pressmatrize angeordnet sein, dies bspw. bei scheibenartiger Ausgestaltung des gesonderten Teils.

Das gesonderte Teil kann mit den, der in Arbeitsstellung befindlichen Pressmulde zugehörigen Zeichen über eine freie Randkante der zugeordneten Pressbacke sichtbar überstehen. Auch kann insbesondere im Bereich der Pressbacke ein fensterartiger Ausschnitt vorgesehen sein, durch welchen das Zeichen sichtbar ist.

Darüber hinaus kann das gesonderte Teil um eine weitere, von der Drehachse der Pressmatrize gesonderte Drehachse angeordnet sein und mit der Pressmatrize getriebemäßig verbunden sein. Bspw. kann das gesonderte Teil zugleich ein Handrad sein zur Verstellung der Pressmatrize.

Bei Ausbildung einer ständigen getriebemäßigen Kopplung zwischen den Pressmatrizen kann nur ein gesondertes Teil mit Zeichen vorgesehen sein. Da die Pressmatrizen hierbei synchron in die Arbeitsposition gedreht werden und somit stets zugehörige Pressmulden aufeinander zuweisend in der Arbeitsstellung liegen, ist nur eine Zeichenanzeige nötig.

Neben dem Aufdruck der Zeichen auf das gesonderte Teil kann auch eine integrale Ausformung der Zeichen mit dem gesonderten Teil vorgesehen sein, dies bspw. zufolge Einstanzen in ein gesondertes Teil aus einem Metallwerkstoff oder weiter bspw. bei Herstellung des gesonderten Teils im Kunststoff-Spritzverfahren. Bei einer bevorzugten Ausbildung des gesonderten Teils als Zink-Druckgussteil können die Zeichen sogleich gießtechnisch mit eingebracht sein.

Darüber hinaus betrifft die Erfindung eine Presszange nach den Merkmalen des Oberbegriffs des Anspruches 1.

Um eine derartige Presszange insbesondere handhabungstechnisch günstiger auszugestalten, wird vorgeschlagen, dass jede Pressmatrize über ein mit dieser getriebemäßig gekoppeltes Einstellrad verstellbar ist, wobei das Einstellrad und die Pressmatrize unterschiedliche Drehachsen aufweisen.

Jede Pressmatrize ist über ein jeweils zugeordnetes Einstellrad zur Verlagerung einer Pressmulde in die Arbeitsstellung verstellbar. Der Angriff durch den Benutzer, insbesondere durch die Hand des Benutzers kann so beabstandet zur Pressmatrize erfolgen. Das Einstellrad ist getriebemäßig mit der Pressmatrize verbunden. Es kann hierbei eine unmittelbare Einwirkung des Einstellrades auf die Pressmatrize vorliegen. Auch kann eine Unter- oder Übersetzung vorgesehen sein.

Das Einstellrad kann Ziffern, insbesondere Zahlen zur Markierung der in Arbeitsstellung befindlichen Pressmulde aufweisen.

Die Drehachsen von Einstellrad und Pressmatrize verlaufen bevorzugt parallel zueinander, insbesondere parallel versetzt zueinander.

Jede Pressbacke weist eine Erstreckung in Längsrichtung auf, ausgehend von einer Anscharnierung der Pressbacke an den zugeordneten Handgriff bis hin zu dem freien, der Pressmatrize zugeordneten Ende. Die Drehachsen von Pressmatrize und Einstellrad einer Pressbacke können in dieser Längsrichtung versetzt zueinander angeordnet sein.

Das Einstellrad kann unmittelbar auf die Pressmatrize einwirken, bspw. durch Ausbildung des Einstellrades und der Pressmatrize bzw. durch Ausbildung von Teilabschnitten derselben als Reibräder oder Zahnräder. Auch eine getriebemäßige Kopplung über einen Reibriemen ist möglich.

Bevorzugt wirkt das Einstellrad über ein Getrieberad auf die Pressmatrize ein. Das Getrieberad ist getriebemäßig zwischengeschaltet. Auch hierüber kann eine Unter- oder Übersetzung erreicht sein.

Darüber hinaus kann die Pressmatrize um eine feststehende, d. h. insbesondere nicht quer zur geometrischen Querachse verlagerbaren Drehachse drehbar sein.

Auch kann die Pressmatrize in einer Pressstellung durch eine Formschluss-Zusammenwirkung mit einer Feder gesichert sein. Die aufgefundene bzw. eingestellte Pressmatrizenstellung ist demnach bevorzugt formschlussgesichert. Hierzu kann eine Feder vorgesehen sein, welche mittelbar oder, wie bevorzugt, unmittelbar mit der Pressmatrize zusammenwirkt. Die radial zu der Drehachse der Pressmatrize vorstehenden Vorsprünge formen umfangsseitig Beaufschlagungsflächen aus, gegen welche in bevorzugter Ausgestaltung die Feder zur Formschluss-Zusammenwirkung tritt. Eine Verdrehung der Pressmatrize aus der Pressstellung ist nur unter Überwindung der Federkraft möglich. Durch Überwindung der Federkraft wird die Feder bzw. ein Federschenkel der Feder insbesondere durch einen Vorsprung der Pressmatrize ausgelenkt.

Die Feder kann eine Drahtfeder, insbesondere eine Schenkelfeder sein. Bevorzugt ist diesbezüglich eine Blattfeder, die mit einer Breitseite in der Pressstellung gegen eine oder mehrere vorsprungseitige Beaufschlagungsflächen der Pressmatrize tritt.

In weiterer Ausgestaltung kann die Blattfeder an der Achse eines Getrieberades abgestützt sein. Auch kann die Blattfeder um diese Achse des Getrieberades zur Aufbringung der Federkraft gebogen sein. Dieser Biegebereich der Blattfeder ist zumindest annährend mittig einer Längserstreckung der Blattfeder vorgesehen. Ein freier Endbereich der Blattfeder wirkt gegen die Pressmatrize. Der andere freie Endbereich der Blattfeder ist bevorzugt im Bereich der zugeordneten Pressbacke gehaltert.

Bei einer Presszange der eingangs beschriebenen Art kann ein Lehrenteil vorgesehen sein, das an eine Außenkontur der Pressmatrize im Bereich einer Pressmulde angepasst ist und ein Schließen der Presszange nur zulässt, wenn die Pressmatrize mit einer zu einer Verpressung geeigneten Ausrichtung einer Pressmulde in der Presszange angeordnet ist.

Durch eine mögliche Fehlbedienung bei der Verstellung der Pressmatrize zur Nutzung einer anderen Pressmulde kann es vorkommen, dass die Pressmatrize nicht ihre finale, ggf. rastgesicherte Stellung erreicht, sondern eine gegenüber dieser leicht verdrehte Stellung. Dies kann bei einer nachfolgenden Verpressung zu einer Beschädigung der Pressmatrize führen. Durch die vorgeschlagene Lösung ist einer solchen Fehlbedienung entgegengewirkt.

Das Lehrenteil ist im Zusammenwirkungsbereich mit der oder den Pressmatrizen an die Außenkontur derselben, bevorzugt außerhalb der Pressmulden angepasst. Bei nicht korrekt ausgerichteter Pressmatrize tritt im Zuge der Zangenschließbewegung ein sich in Umfangsrichtung zwischen zwei Pressmulden erstreckender Vorsprung sperrend und/oder führend gegen eine Flanke des Lehrenteils.

So kann sich eine Flanke des Lehrenteils bei nicht korrekt ausgerichteter Pressmatrize sperrend in den Schwenkweg eines Pressmatrizen-Vorsprunges stellen, sodass die Verpressstellung in dieser Pressmatrizenstellung nicht erreicht werden kann.

Auch kann die Flanke des Lehrenteils so ausgerichtet sein, dass eine Zwangssteuerung der Pressmatrize unter Ablaufen des Matrizen-Vorsprunges entlang der Flanke erreicht wird, um so zumindest eine zu dem Vorsprung benachbarte Pressmulde in eine Arbeitsstellung zu verlagern.

Das Lehrenteil kann als Plattenteil ausgebildet sein. So kann weiter das Lehrenteil in einem Grundriss, in welchem sich die geometrischen Drehachsen der Pressbacken als Punkte darstellen, dreieckförmig gebildet sein, wobei eine Dreieckspitze im Grundriss bevorzugt konturangepasst ist an die zugewandte Außenkontur der die Pressmulden beider Pressmatrizen einseitig begrenzenden Vorsprünge.

Die senkrecht zur Flächenerstreckung des Plattenteiles betrachtete Materialstärke kann der in selber Richtung betrachteten Materialstärke einer Pressmatrize entsprechen.

Weiter erstreckt sich das Lehrenteil bevorzugt in einer zugleich die beiden Pressmatrizen aufnehmenden Ebene.

Des Weiteren kann das Lehrenteil an den Schwenkachsen der Pressbacken gelagert sein. So kann das Lehrenteil von entsprechenden Achsbolzen durchsetzt sein. Bei einer möglichen dreieckförmigen Grundrissausbildung des Lehrenteils sind diese Achsen bzw. Achsbolzen bevorzugt jeweils einem Eckbereich zugeordnet.

Die unabhängig von einer Schwenkstellung der Pressbacken ständig getriebemäßig gekoppelten Pressmatrizen können über ein Einstellrad ggf. unter Zwischenschaltung eines Getrieberades verstellbar sein, wobei das Getrieberad und/oder das Einstellrad ganz oder teilweise elastisch ausweichbar gebildet ist.

Zufolge dieser Ausgestaltung ist einer Beschädigung der Presszange, insbesondere einer oder beider Pressmatrizen und/oder hiermit in Wirkstellung stehende Bauteile bei einer möglichen Fehlstellung der Pressmatrizen zueinander im Zuge einer Pressmaul-Schließbewegung entgegengewirkt. Die hierbei auf die Pressmatrizen und/oder auf das oder die Getrieberäder bzw. das Einstellrad wirkenden Kräfte führen zufolge ausweichbarer Ausbildung des Getrieberades und/oder des Einstellrades nicht zu einer Beschädigung der Verstell- und/oder Presskomponenten. Getrieberad und/oder Einstellrad weichen bei entsprechender Krafteinwirkung infolge einer Fehlstellung der Pressmatrizen gänzlich oder in Form eines Teilabschnittes im Wesentlichen in Krafteinwirkungsrichtung aus. Zahnräder können so auch in eine Außereingriffsstellung bzw. Überlaufstellung verbracht werden. Durch die bevorzugte Elastizität ist mit Fortfall der Krafteinwirkung eine selbstständige Rückstellung von Getrieberad und/oder Einstellrad in die ursprüngliche Funktionsstellung erreichbar.

Die elastische Ausweichbarkeit kann bspw. gegeben sein durch eine im Wesentlichen in Krafteinwirkungsrichtung abgefederte Abstützung des Getrieberades und/oder Einstellrades, weiter bspw. eines Achskörper eines solchen Rades. Auch kann das Getrieberad und/oder Einstellrad aus einem elastisch nachgebbaren Werkstoff, wie bspw. Gummi, bestehen.

Zudem kann das Getrieberad und/oder das Einstellrad Verzahnungszähne aufweisen, womit Getrieberad und/oder Einstellrad in Form eines Zahnrades wirkt, wobei eine oder mehrere Gruppen von zwei oder mehr Verzahnungszähnen ausgebildet sind, wobei weiter die Verzahnungszähne einer Gruppe an einem gemeinsamen Halterungsteil ausgebildet sind und das Halterungsteil über einen einzigen federbaren Ast an einem radial inneren Bereich des Getrieberades oder Einstellrades angebunden ist.

Eine Presszange kann ein Bestimmungsteil aufweisen, zur Bestimmung eines Durchmessers eines elektrischen Leiters, auf den aufzupressen ist, und das Bestimmungsteil kann eine Mehrzahl von Durchlassöffnungen mit jeweils einem engsten Querschnitt aufweisen, der einem Nenndurchmesser eines elektrischen Leiters entspricht.

Es ist so eine Klassifizierung des zu verpressenden Leiters hinsichtlich der Größe und der danach auszuwählenden Pressmulde der Pressmatrizen ermöglicht. Hierzu kann ein lehrenartiges Bestimmungsteil vorgesehen sein. Dieses kann aus einem Hartkunststoff bestehen, alternativ aber auch aus einem Metallwerkstoff. Die mit dem Leiterdurchmesser übereinstimmende Durchlassöffnung gibt dem Anwender einen Hinweis auf die einzustellenden Pressmulden. So kann das Bestimmungsteil zugeordnet den Durchlassöffnungen entsprechende Markierungen, bspw. in Form von Durchmesserbezeichnungen bzw. Pressmuldenbezeichnungen aufweisen.

Das Bestimmungsteil kann an der Presszange stets zur Nutzung frei zugänglich sein. Bevorzugt ist eine ausklappbare Anordnung des Bestimmungsteiles an der Presszange, sodass das Bestimmungsteil bei Nichtnutzung aus einer Gebrauchslage in eine Nichtgebrauchslage verschwenkt werden kann. Die Nichtgebrauchslage kann eine Verstecktlage sein.

Eine diesbezügliche Schwenkachse des Bestimmungsteiles kann parallel verlaufend zu den Drehachsen der Pressmatrizen ausgerichtet sein.

Auch kann das Bestimmungsteil in Überdeckung zu einer Backenplatte einer Pressbacke anordbar sein. Aus dieser Überdeckungsstellung heraus kann zufolge Verschwenken das Bestimmungsteil in die Nutzungsstellung verbracht werden.

Bevorzugt sind zwei Backenplatten in Überdeckung zueinander angeordnet, wobei das Bestimmungsteil zwischen den Backenplatten insbesondere in der Nichtbenutzungsstellung anordbar ist.

Ist eine Pressbacke mit einem Einstellrad zur synchronen Verstellung der Pressmatrizen ausgerüstet, so kann die andere Pressbacke mit dem ausschwenkbaren Bestimmungsteil versehen sein.

Die Durchlassöffnungen eines Bestimmungsteiles können für zollbasierte Kabelgrößen oder auch für solche, die metrisch basiert sind, ausgebildet sein.

Bei einem Zahnrad mit Verzahnungszähnen, wobei eine oder mehrere Gruppen von zwei oder mehr Verzahnungszähnen ausgebildet sein können und die Verzahnungszähne einer Gruppe an einem gemeinsamen Halterungsteil ausgebildet sind, kann das Halterungsteil über einen einzigen federbaren Ast an einem radial inneren Bereich des Zahnrades angebunden sein.

Hierzu kann vorgesehen sein,
dass der Ast in Umfangsrichtung außermittig an dem Halterungsteil angebunden ist. Zufolge dieser außermittigen Anordnung ist neben einem federnden Ausweichen in Umfangsrichtung auch ein federndes Ausweichen in Radialrichtung (bezogen auf die Drehachse des Zahnrades) erreichbar, dies selbst bei einer zentralen Beaufschlagung, weiter insbesondere bei einer streng radialen Beaufschlagung des Halterungsteiles.

Die den jeweiligen federbaren Ast flankierenden, randoffenen Schlitze erstrecken sich über eine radial größere Länge als die in Umfangsrichtung zwischen zwei Verzahnungszähnen sich ergebende Zahnlücke.

Ein solches Zahnrad kann in Laser-Schneidetechnik hergestellt sein. Durch die federbare Anbindung einer Gruppe von Verzahnungszähnen an dem radial inneren Bereich ist eine elastische Ausweichbarkeit dieser Gruppe von Verzahnungszähnen bei entsprechender Krafteinwirkung erreichbar. Der verbindende Ast wirkt in Art eines Federschenkels.

Bevorzugt ist der Ast mit Bezug auf eine Draufsicht auf das Zahnrad kreisabschnittförmig verlaufend gestaltet, somit zumindest annähernd blattfederartig. Auch kann der Ast in Umfangsrichtung außermittig an dem Halterungsteil angebunden sein, dies insbesondere bezogen auf eine Erstreckung des Halterungsteiles in Umfangsrichtung des Zahnrades.

Bevorzugt sind an dem Halterungsteil drei, vier oder mehr Verzahnungszähne ausgebildet. Weiter bevorzugt ergeben sich an dem Zahnrad mehrere Gruppen je vier Verzahnungszähne, weiter bevorzugt acht Gruppen.

Die Verzahnungszähne aller Gruppen eines Zahnrades ergeben in entspannter Stellung der die Halterungsteile tragenden Äste eine gleichmäßige umlaufende Verzahnung entlang einer Kreislinie.

Die vorbeschriebenen Merkmale sind sowohl für sich als auch in Kombination mit einem oder mehreren der weiteren Merkmale von Bedeutung.

Die vor- und nachstehend angegebenen Bereiche bzw. Wertebereiche oder Mehrfachbereiche schließen hinsichtlich der Offenbarung auch sämtliche Zwischenwerte ein, insbesondere in 1/10-Schritten der jeweiligen Dimension, ggf. also auch dimensionslos. Bspw. beinhaltet die Angabe 5 bis 45 Grad auch die Offenbarung von 5,1 bis 45 Grad, 5 bis 44,9 Grad, 5,1 bis 44,9 Grad, 6,8 bis 37,2 Grad etc. Diese Offenbarung kann einerseits zur Eingrenzung einer genannten Bereichsgrenze von unten und/oder oben, alternativ oder ergänzend aber zur Offenbarung eines oder mehrerer singulärer Werte aus einem jeweilig angegebenen Bereich dienen.

Nachstehend ist die Erfindung anhand der beigefügten Zeichnungen erläutert, die aber lediglich Ausführungsbeispiele darstellt. Ein Teil, dass nur bezogen auf eines der Ausführungsbeispiele erläutert ist und bei einem weiteren Ausführungsbeispiel aufgrund der dort herausgestellten Besonderheit nicht durch ein anderes Teil ersetzt ist, ist damit auch für dieses weitere Ausführungsbeispiel als ebenfalls mögliches vorhandenes Teil beschrieben. Auf der Zeichnung zeigt:
- Figur 1:: In Ansicht eine handbetätigbare Presszange in einer ersten Ausführungsform, eine Pressbacken-Schließstellung betreffend;
- Figur 2:: die Seitenansicht hierzu;
- Figur 3:: den Schnitt gemäß der Linie III-III in Figur 2;
- Figur 4:: die Vergrößerung des Bereiches IV in Figur 3;
- Figur 5:: eine der Figur 3 entsprechende Darstellung, jedoch die Offenstellung der Pressbacken betreffend;
- Figur 6:: eine der Figur 5 entsprechende Darstellung, mit in strichlinierter Wiedergabe von ineinander greifenden Zahnrädern;
- Figur 7:: eine der Figur 6 entsprechende Darstellung, eine Zwischenstellung im Zuge der Verstellung der Pressmatrizen betreffend;
- Figur 8:: in Ansicht eine Presszange in einer zweiten Ausführungsform;
- Figur 9:: eine im Wesentlichen der Figur 3 entsprechende Darstellung, betreffend eine dritte Ausführungsform;
- Figur 10:: eine weitere im Wesentlichen der Figur 3 entsprechende Darstellung, eine vierte Ausführungsform der Presszange als motorisch antreibbare Presszange betreffend;
- Figur 11:: eine der Figur 3 entsprechende Darstellung, betreffend eine weitere Ausführungsform;
- Figur 12:: in explosionsperspektivischer Darstellung eine Ausführungsform einer Pressmatrize mit koaxial zugeordnetem gesonderten Teil,
- Figur 13:: eine der Figur 5 entsprechende Darstellung, eine weitere Ausführungsform einer Presszange betreffend;
- Figur 14:: eine weitere Ausführungsform in einer Darstellung gemäß Figur 13;
- Figur 15:: die Presszange gemäß Figur 14 in Pressstellung;
- Figur 16:: eine der Figur 5 entsprechende Darstellung, jedoch eine alternative Ausführungsform hinsichtlich der Pressmatrizen betreffend;
- Figur 17:: eine weitere Ausführungsform einer Presszange gemäß der Darstellung in Figur 5;
- Figur 18:: die Presszange gemäß Figur 17 in Pressstellung;
- Figur 19:: eine der Figur 17 im Wesentlichen entsprechende Darstellung, betreffend eine Fehlstellung der Pressmatrizen;
- Figur 20:: eine der Figur 17 entsprechende Darstellung, eine alternative Ausführungsform betreffend;
- Figur 21:: ein Formschlussmittel in Draufsicht, betreffend ein weiteres Ausführungsbeispiel;
- Figur 22:: eine der Figur 6 im Wesentlichen entsprechende Darstellung, eine weitere alternative Ausführungsform betreffend;
- Figur 23:: den Schnitt gemäß der Linie XXIII-XXIII in Figur 22;
- Figur 24:: eine weitere der Figur 3 im Wesentlichen entsprechende Draufsicht auf eine Presszange, eine weitere Ausführungsform betreffend;

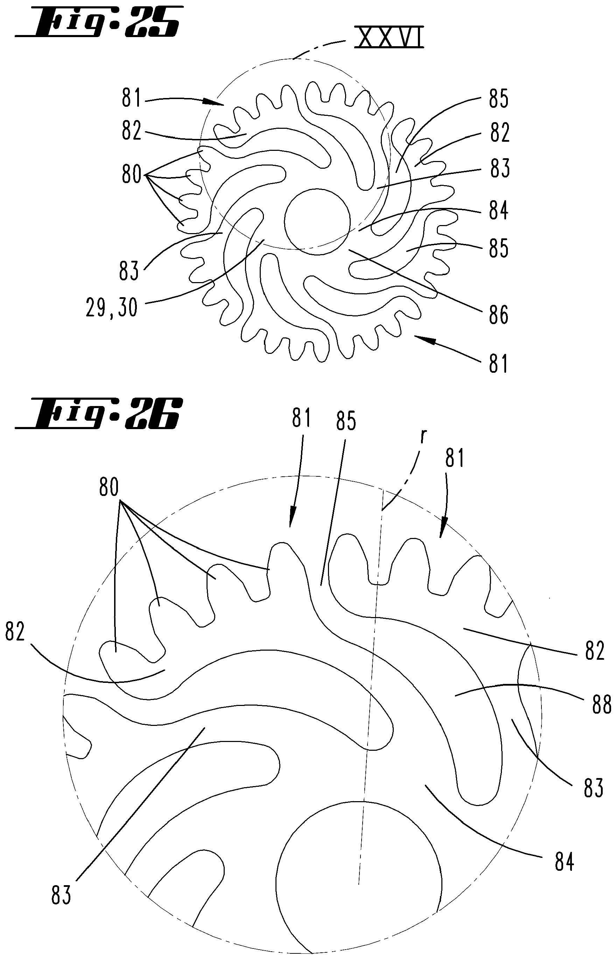

- Figur 25:: ein Getrieberad der Presszange gemäß Figur 23 in Einzel-Draufsicht;
- Figur 26:: die Herausvergrößerung des Bereiches XXV in Figur 24;
- Figur 27:: in schematischer Darstellung ein Getrieberad in Anordnungsstellung, eine weitere Ausführungsform betreffend;
- Figur 28:: eine der Figur 26 entsprechende Darstellung, betreffend eine weitere Ausführungsform;
- Figur 29:: in perspektivischer Darstellung ein lehrenartiges Bestimmungsteil;
- Figur 30:: die Draufsicht auf das Bestimmungsteil;
- Figur 31:: den Schnitt gemäß der Linie XXX-XXX in Figur 29.

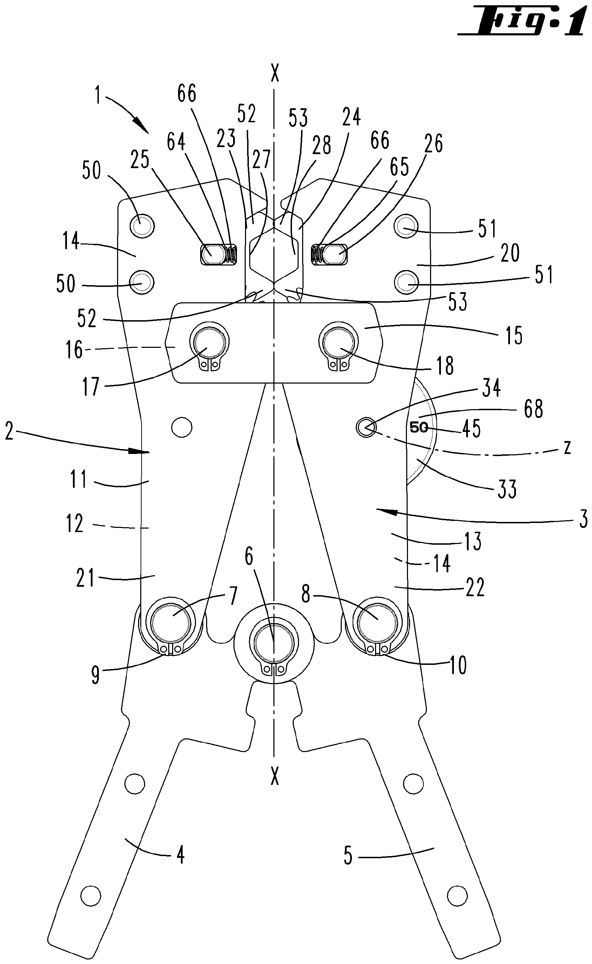

Dargestellt und beschrieben ist zunächst mit Bezug zu Figur 1 eine handbetätigbare Presszange 1 in einer, eine Arbeitsstellung, d.h. eine Pressstellung zeigenden Draufsicht. Die Presszange 1 ist im Wesentlichen symmetrisch zu einer Achse x-x aufgebaut und weist zwei Pressbacken 2, 3 und zwei als Winkelhebel ausgebildete Handgriffe 4, 5 auf. Letztere sind an ihren abgewinkelten Enden durch einen auf der Symmetrieachse x-x angeordneten Gelenkzapfen 6 miteinander verbunden.

Beidseitig des Gelenkzapfens 6 sind die Pressbacken 2, 3 mit ihren freien Endbereichen an den Handgriffen 4, 5 angelenkt, wobei die Pressbacken 2, 3 und die Handgriffe 4, 5 durchsetzende Bolzen 7, 8 vorgesehen sind, welche mit Federringen 9, 10 gesichert sind.

Die mit Bezug auf die Achse x-x spiegelbildlich im Wesentlichen gleich ausgebildeten Pressbacken 2, 3 bestehen jeweils zunächst aus zwei in Achsrichtung der Bolzen 7, 8 sowie auch des Gelenkzapfens 6 zueinander distanzierten Backenplatten 11, 12 und 13, 14. In den Abstandsraum zwischen den Backenplatten 11, 12 bzw. 13, 14 greifen die bolzenseitigen Endbereiche der Handgriffe 4, 5 ein.

Die Pressbacken 2, 3 sind sowohl auf der Ober- als auch auf der Unterseite, entsprechend jeweils der nach außen weisenden Flachseite der Backenplatten, durch Laschen 15, 16 verbunden, welche wiederum untereinander durch, die Pressbacken 2, 3 durchsetzenden Achsbolzen 17,18 miteinander verbunden sind.

Die geometrischen Achsen der Bolzen 7, 8, des Gelenkzapfens 6 sowie der Achsbolzen 17,18 sind quer zur Achse x-x und senkrecht zu einer Ebenenerstreckung der Pressbacken 2, 3 bezüglich ihrer Breitseiten ausgerichtet.

Die Drehachsen der Pressbacken 2, 3 sind durch die Achsbolzen 17, 18 gebildet, wodurch die Pressbacken 2, 3 in kurze vordere Hebelarme 19, 20 und längere hintere, den Gelenkbolzen 7, 8 zugewandte Hebelarme 21, 22 unterteilt sind.

In den vorderen, kurzen Hebelarmen 19, 20 der Pressbacken 2, 3 ist jeweils eine Pressmatrize 23, 24 auf einer Achse 25, 26 drehbar gelagert. Die Achsen 25, 26 durchsetzen jeweils beide Backenplatten der Pressbacken 2, 3 und sind beidseitig bspw. mittels Verschraubung gesichert. Die geometrische Drehachse der Pressmatrizen ist mit y bezeichnet.

Die Pressmatrizen 23, 24 haben die Grundrissform eines geradzahligen Vielecks. Bei dem gezeigten Ausführungsbeispiel sind die Pressmatrizen 23, 24 im Grundriss als regelmäßige Sechsecke ausgebildet.

Die im Allgemeinen scheibenartig ausgebildeten Pressmatrizen 23, 24 weisen am Umfang, jeweils einer Seitenfläche des bevorzugten Sechsecks zugeordnet, Pressmulden 27, 28 mit unterschiedlichen Öffnungsquerschnitten auf.

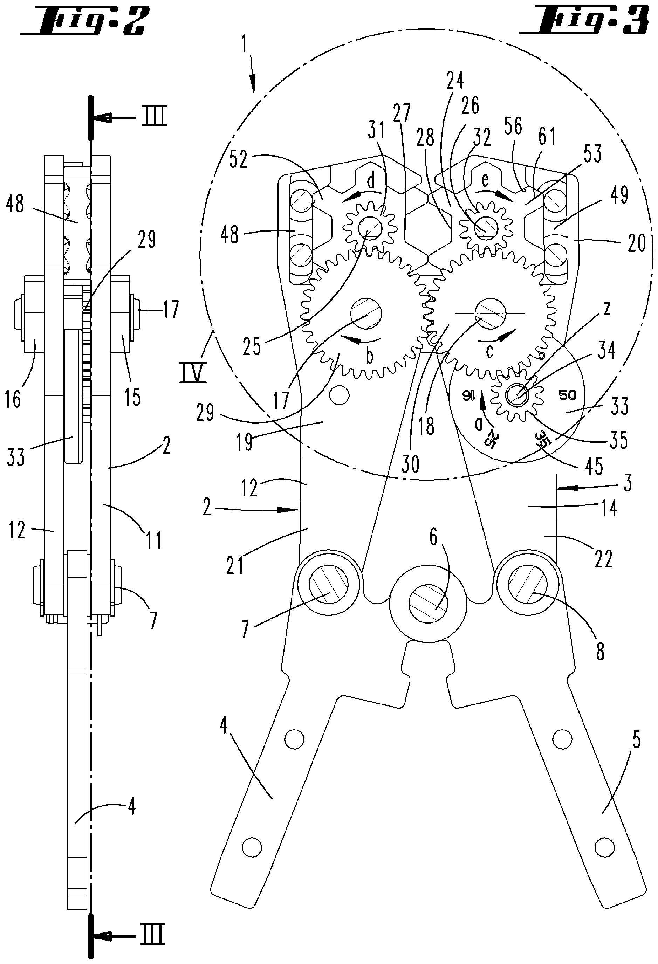

In einer Draufsicht bspw. gemäß der Figur 3 zeigen die Pressmulden 27, 28 die Form eines halben gleichseitigen Sechseck auf. In Arbeitsstellung, d.h. in Pressstellung gemäß den Figuren 1 bis 4 bilden jeweils zwei Pressmulden 27, 28 mit gleichem Öffnungsquerschnitt zusammen ein regelmäßiges Sechseck zum Aufpressen von Kabelschuhen, Verbindern oder dergleichen auf elektrische Leiter usw.

Zur ordnungsgemäßen Verpressung eines Kabelschuhs oder dergleichen sind Pressmulden 27, 28 gleicher und auf die Verpressung angepasster Größe in die Arbeitsstellung zu verbringen. Dies geschieht durch Drehen der Pressmatrizen 23, 24 um die Achsen 25, 26.

Die Drehverlagerung der Pressmatrizen 23, 24 ist synchronisiert. Dies ist erreicht durch eine ständige getriebemäßige Kopplung der Pressmatrizen 23, 24, welche Kopplung von der Schwenkstellung der Pressbacken 2, 3 unabhängig ist.

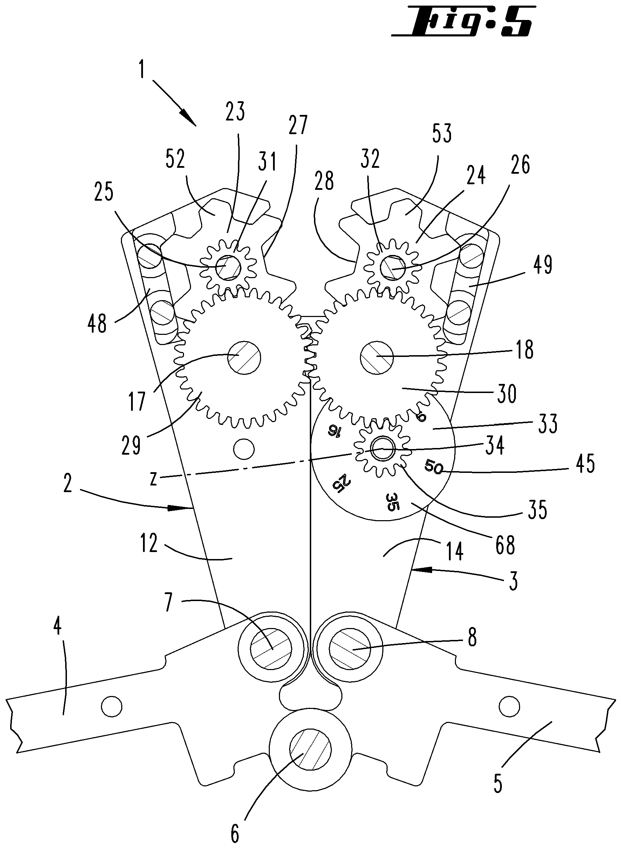

Für die getriebemäßige Kopplung ist in einer ersten Ausführungsform gemäß den Figuren 1 bis 7 an jeder Pressbacke 2 ein Getrieberad 29, 30 in Form eines Zahnrades drehbar angeordnet. Die Durchmesser der Getrieberäder 29, 30 sind gleich.

Wie auch die Pressmatrizen 23, 24 erstrecken sich die Getrieberäder 29, 30 in dem belassenen Abstandsraum zwischen den Backenplatten der Pressbacken 2, 3.

Die Getrieberäder 29, 30 sind drehbar auf den Achsbolzen 17, 18 gelagert, wobei die zahnradförmigen Getrieberäder 29, 30 miteinander kämmen. Durch die gewählte Anordnung der Getrieberäder 29, 30 auf den Achsbolzen 17,18 ist der kämmende Eingriff zueinander in jeder Schwenkstellung der Pressbacken 2, 3 sichergestellt.

Der Außendurchmesser eines jeden Getrieberades 29, 30 entspricht im Wesentlichen etwa dem Durchmesser einer die radial Spitzen der Pressmatrizen 23, 24 verbindenden Kreislinie.

Auf den Achsen 25, 26 sind Abtriebsräder 31, 32 vorgesehen, welche drehfest mit der jeweiligen Pressmatrize 23, 24 verbunden sind. Die Abtriebsräder 31, 32 sind in Bezug auf die erste Ausführungsform Zahnräder, welche mit dem jeweilig zugeordneten Getrieberad 29, 39 kämmen.

Der Durchmesser des Abtriebrades 31, 32 ist gegenüber dem Durchmesser des Getrieberades 29, 30 verringert. So weist ein Abtriebsrad 31, einen Außendurchmesser auf, welcher etwa dem 0,4- bis 0,5-Fachen des Außendurchmessers eines Getrieberades 29, 30 entspricht.

Weiter ist der Durchmesser eines Abtriebrades 31, 32 so gewählt, dass mit Bezug auf eine Projektion entlang der Drehachse y dieses nicht in die Pressmulden 27 bzw. 28 der zugeordneten Pressmatrize 23, 24 einragt.

Weiter ist an einer Pressbacke 3 ein gesondertes Teil 33 in Form eines Einstellrades 68 vorgesehen. Dieses ist im Bereich des hinteren, längeren Hebelarms 22 um einen die zugehörigen Backenplatten 13,14 durchsetzenden Achsbolzen 34 mit einer Drehachse z drehbar gelagert. Das gesonderte Teil 33 ist kreisscheibenförmig gestaltet mit einer Kreisscheibenfläche, welche sich ebenenversetzt parallel zu den Breitflächen der Getrieberäder 29, 30 und der Pressmatrizen 23, 24 erstreckt.

Zugeordnet einer Scheibenfläche des gesonderten Teils 33 ist an diesem drehfest und koaxial zu diesem angeordnet ein Antriebsrad 35 in Form eines Zahnrades vorgesehen. Dieses kämmt mit der Außenverzahnung des zugeordneten Getrieberades 30 der Pressbacke 3.

Die Anordnung des Achsbolzens 34 ist hierbei bevorzugt so gewählt, dass das gesonderte Teil 33 mit einem Teilabschnitt über die Grundrisskontur der Pressbacke 3 nach außen, d.h. abgewandt zu der gegenüberliegenden Pressbacke 2, frei vorsteht, zur Bedienung des Antriebrades 35 von Hand. So kann das Antriebsrad 35 bspw. daumenbetätigt werden, indem die Daumenfläche das gesonderte Teil 33 über dessen Umfangskante drehverlagert.

Eine Drehverlagerung des gesonderten Teiles 33 führt über das Getriebe, bestehend aus Antriebsrad 35, Getrieberäder 29, 30 und Abtriebsräder 31, 32, zu einer synchronen Drehverlagerung der Pressmatrizen 23, 24, sodass allein durch Verlagerung nur eines Teils (gesondertes Teil 33) stets gleiche Pressmulden 27, 28 sich gegenüberliegend in die Arbeitsstellung verbracht werden können.

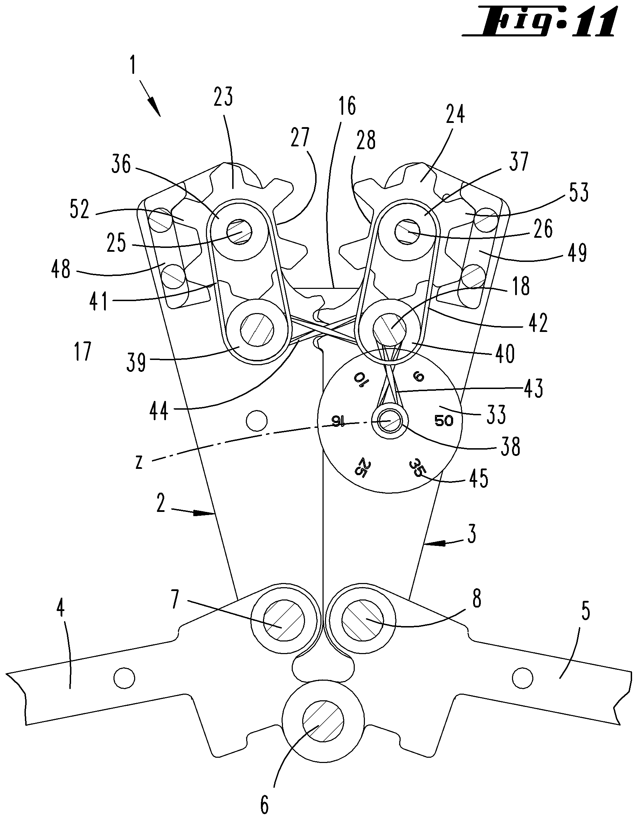

Alternativ zu der Zahnrad-Getriebeanordnung kann die getriebemäßige Kopplung gemäß der Ausführungsform in Figur 11 auch durch Transmissionsriemen gegeben sein.

Das kreisscheibenförmige gesonderte Teil 33 sowie die Pressmatrizen 23, 24 verfügen in diesem Fall über drehfest und koaxial zu diesen angeordnete Zylinderabschnitte 36 bis 38, deren Mantelaußenflächen bspw. durch eine Mikrostrukturierung geraut sein kann.

Derartige Zylinderabschnitte 39, 40 sind auch frei drehbar auf den Achsbolzen 17, 18 gelagert.

Jeder achsbolzenseitige Zylinderabschnitt 39, 40 ist über einen Abtriebsriemen 41, 42 mit dem Zylinderabschnitt 36, 37 der zugeordneten Pressmatrize 23, 24 verbunden.

Ein ggf. über Kreuz verlegter Antriebsriemen 43 verbindet den achsbolzenseitigen Zylinderabschnitt 40 mit dem Zylinderabschnitt 38 des gesonderten Teils 33.

Die beiden achsbolzenseitigen Zylinderabschnitte 39 und 40 sind untereinander verbunden über einen Transmissionsriemen 44, welcher bevorzugt über Kreuz angeordnet ist.

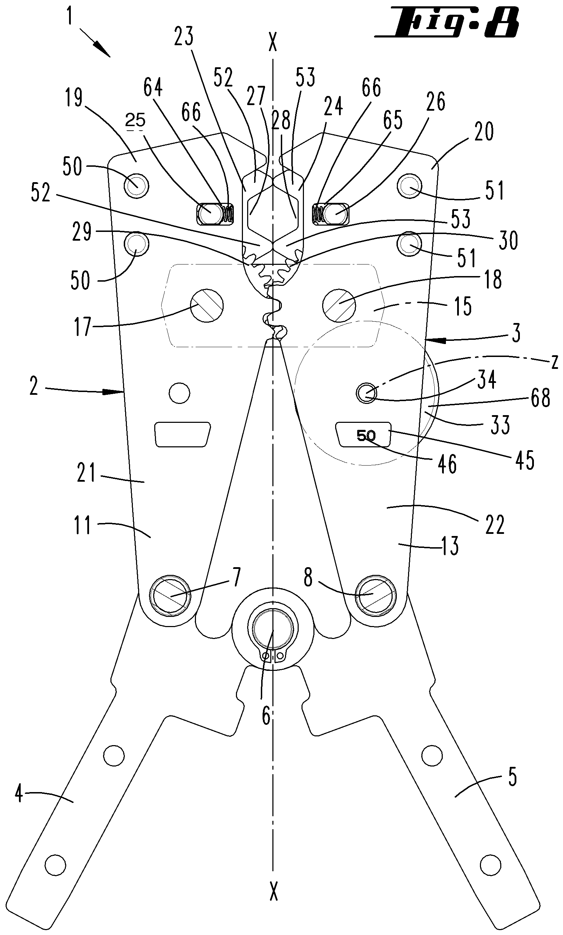

Auf dem gesonderten Teil 33 sind auf dessen Kreisscheibenfläche Zeichen 45 in Form von Ziffern aufgebracht, welche den Nennweiten der Pressmulden 27 und 28 entsprechen. Die Zeichen 45 sind auf einer Kreislinie um die geometrische Achse des Achsbolzens 34 angeordnet, derart, dass die die Pressmulden 27, 28 in der Arbeitsstellung betreffende Nennweite entweder auf dem über den Grundriss der Pressbacke 3 hinausragenden Abschnitt des gesonderten Teils 33 für den Benutzer erkennbar ist (vgl. Figur 1 oder Figur 3) oder durch ein in der die Ziffernseite des gesonderten Teiles 33 überdeckenden Backenplatte 13 der Pressbacke 3 freigestanztes Fenster 46 (vgl. bspw. Figur 8).

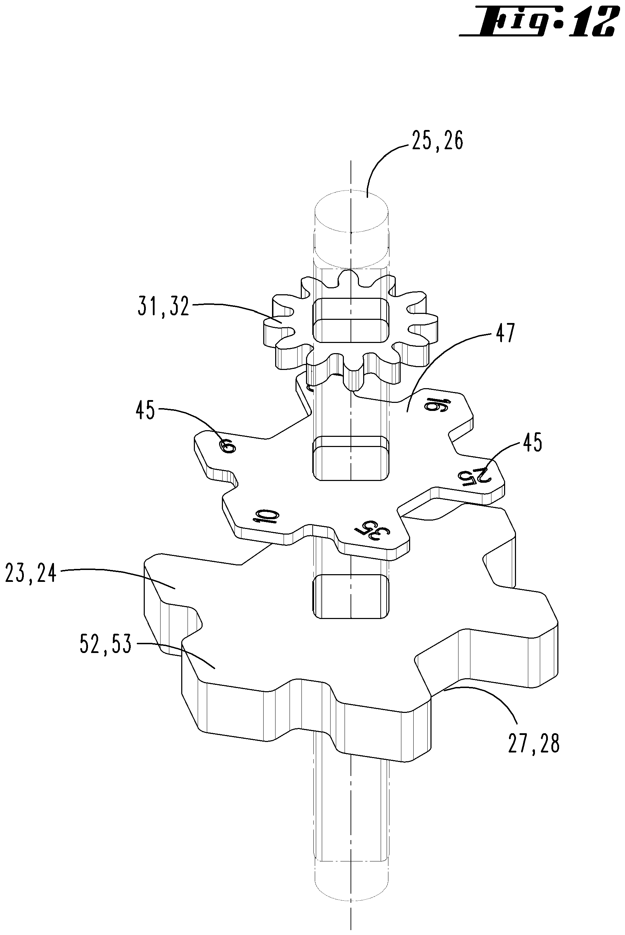

Auch kann, wie in Figur 12 beispielhaft dargestellt, ein gesondertes Teil 47 mit aufgebrachten, bspw. aufgedruckten oder integral mit dem gesonderten Teil ausgeformten Zeichen 45 versehen sein, welches Teil 47 koaxial zu einer Pressmatrize 23, 24 angeordnet ist und weiter bspw. konturangepasst mit der Pressmatrize 23, 24 ausgeformt ist.

Das Teil 47 ist drehfest mit der Pressmatrize 23, 24 verbunden, bspw. durch eine unrunde Ausgestaltung der von der Achse 25, 26 durchsetzten Bohrung und des durchsetzenden Abschnitts der Achse.

Unabhängig von der Ausgestaltung und Anordnung des die Zeichen 45 tragenden gesonderten Teils ist dieses bei einer Verpressung keiner Presskraft ausgesetzt. Bevorzugt ist gegenüber den Pressmatrizen 23, 24 bei dem gesonderten Teil ein anderer Werkstoff gewählt, bspw. Zink-Druckguss, was das Aufbringen der Ziffern 45 bspw. durch Aufdrucken oder das Einbetten der Zeichen 45 im Zuge des Gießvorganges erleichtert.

Die jeweilige Arbeitsstellung der Pressmatrizen 23, 24 ist formschlussgesichert. Hierzu ist jeder Pressmatrize 23, 24 ein böckchenartiges Formschlussmittel 48, 49 zugeordnet. Die Formschlussmittel 48, 49 erstrecken sich im Zwischenraum zwischen den zugeordneten Backenplatten der Pressbacken 2, 3 und sind über stiftartige Fortsätze 50, 51 in den Backenplatten gehaltert.

Die Formschlussmittel 48, 49 sind der in Arbeitsstellung befindlichen Pressmulde 27, 28 abgewandt angeordnet.

In Umfangsrichtung einer jeden Pressmatrize 23, 24 betrachtet erstreckt sich zwischen zwei benachbarten Pressmulden 27, 28 ein mit Bezug zu der geometrischen Drehachse y der Pressmatrize 23, 24 im Wesentlichen radial ausgerichteter, zahnartiger Vorsprung 52, 53.

Ein jeder Vorsprung 52, 53 weist zwei zueinander im Grundriss einen stumpfen Winkel einschließende Beaufschlagungsflächen 54, 55 bzw. 56, 57 auf. Die Beaufschlagungsflächen ergeben eine dachförmige Ausspitzung eines jeden Vorsprungs 52, 53.

Die Beaufschlagungsflächen 54, 55 bzw. 56, 57 erstrecken sich weiter in Bezug auf einen Grundriss gemäß Figur 3 auf einer die Spitzen der Vorsprünge 52, 53 verbindenden Linie einer bevorzugten Sechskantkontur.

Die Beaufschlagungsflächen 54, 55 bzw. 56, 57 der Vorsprünge 52, 53, die die in der Arbeitsstellung befindlichen Pressmulde 27, 28 gegenüberliegende Pressmulde begrenzen, wirken mit angepassten Formschlussflächen 58 bis 60 bzw. 61 bis 63 der Formschlussmittel 48, 49 zusammen.

Bevorzugt liegen die Beaufschlagungsflächen der Vorsprünge 52, 53 in der Formschlussstellung vollflächig an den zugeordneten Formschlussflächen der Formschlussmittel 48, 49 an.

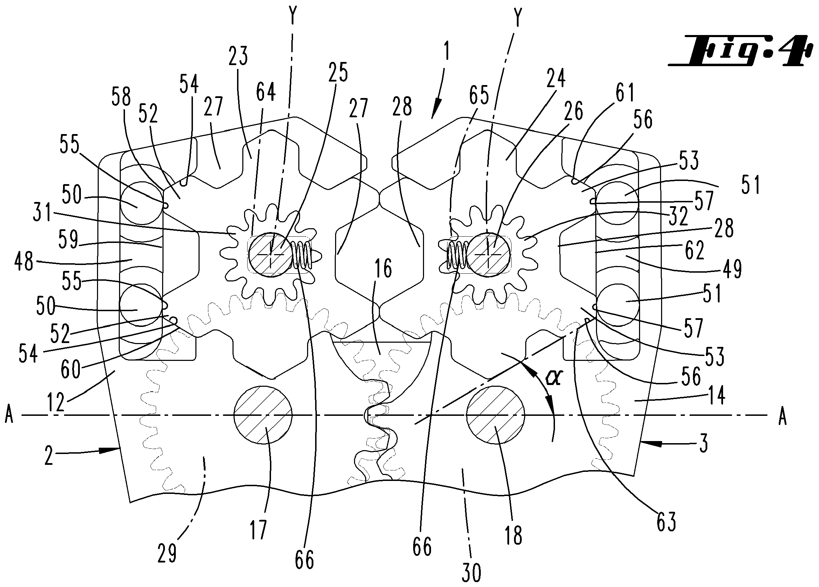

Mit Bezug auf eine die geometrischen Achsen der Achsbolzen 17,18 verbindenden Geraden A erstrecken sich die Formschlussflächen 59, 62 in der Verpressstellung der Pressbacken 2, 3 gemäß der Darstellung in Figur 4 in Querrichtung zu der Geraden A. Die sich unmittelbar an der, dem Formschlussmittel 48, 49 zugewandten Pressmulde 27, 28 in Umfangsrichtung anschließenden Beaufschlagungsflächen 55, 57 der Pressmatrizen 23, 24 stützen sich in der Formschlussstellung an diesen quer zur Geraden A ausgerichteten Formschlussfläche 59, 62 ab.

In der Formschlussstellung erstrecken sich die weiteren Beaufschlagungsflächen 54, 56 in einem spitzen Winkel α von etwa 30 Grad zu der Geraden A (mit Bezug auf die Verpressstellung gemäß Figur 4).

Die korrespondierenden Formschlussflächen 58, 60 und 61, 63 verlaufen ausgehend von den Formschlussflächen 59, 62 in einem entsprechenden spitzen Winkel, zur bevorzugten vollflächigen Anlage der korrespondierenden Beaufschlagungsflächen.

Die Pressmatrizen 23, 24 sind in der Formschlussstellung gemäß der Darstellung in Figur 3 drehgesichert. Zum Verdrehen der Pressmatrizen 23, 24 ist der Formschluss zunächst aufzuheben. Dies erfolgt einhergehend mit der Dreheinwirkung auf die Pressmatrize 23, 24, insbesondere durch das getriebeübersetzte Einwirken über das gesonderte Teil 33 von Hand.

Die Achsen 25, 26 der Pressmatrizen 23, 24 sind geführt in mit Bezug auf einen Grundriss quer zur Ausrichtung der Formschlussflächen 59, 62 ausgerichteten Langlöchern 64, 65 der Pressbacken 2, 3. Hierdurch sind die Pressmatrizen 23, 24 zur Aufhebung der Formschlusssicherung quer zu den Formschlussmitteln 48, 49 verlagerbar.

Eine solche Verlagerung erfolgt gegen die Kraft einer Feder 66. Diese kann eine Zylinderdruckfeder, wie bspw. in Figur 1 dargestellt, sein, die in einer Radialbohrung der Achse 25, 26 einsitzend sich gegen eine Begrenzungswand des zugeordneten Langloches 64, 65 abstützt.

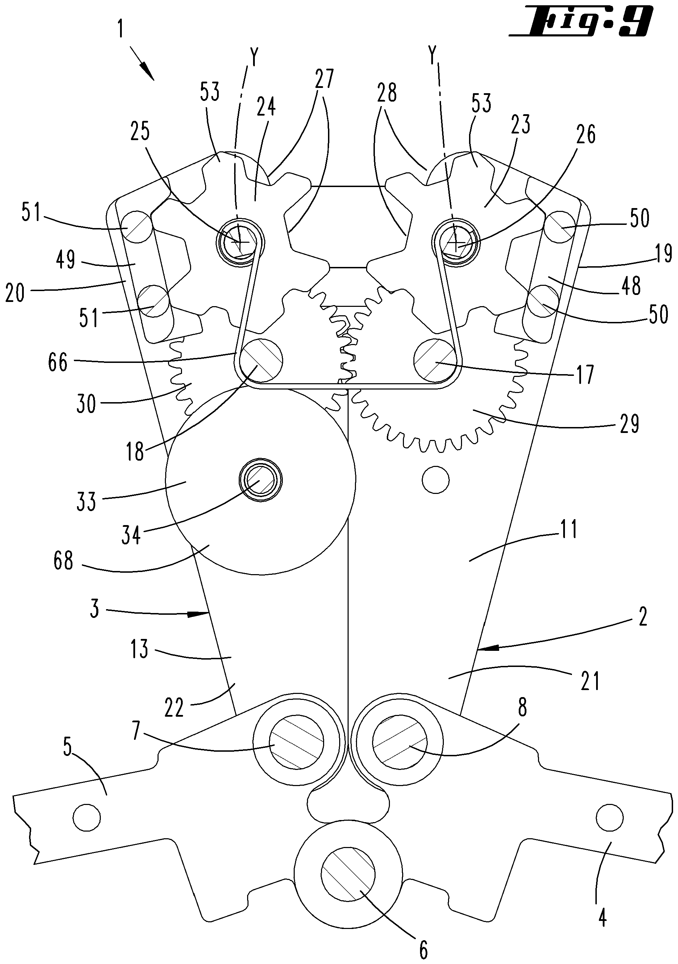

Auch kann die Feder gemäß der Darstellung in Figur 9 eine Schenkelfeder sein, die im Bereich der Achsbolzen 17,18 gefasst ist und mit ihren freien Enden auf die Achsen 25, 26 der Pressmatrize 23, 24 in Richtung auf die Formschlussmittel 48, 49 einwirkt.

Die Federkraft wirkt stets in Richtung auf die Formschlussstellung, dies unabhängig von der Schwenkstellung der Pressbacken 2, 3.

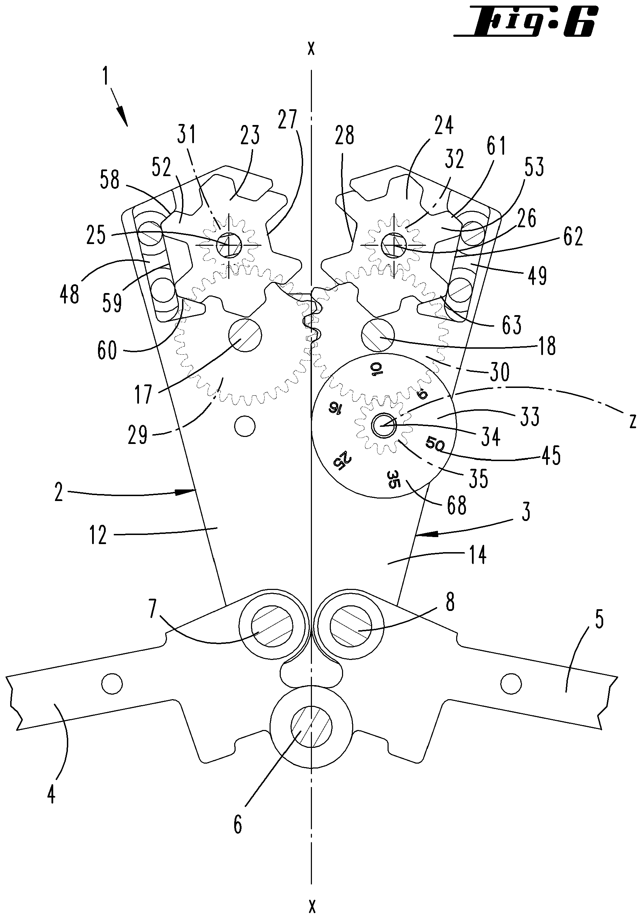

Zur Verstellung der Pressmatrizen 23, 24 wird das scheibenförmige gesonderte Teil 33 gemäß der Darstellung in Figur 6 bevorzugt in Pfeilrichtung a - mit Bezug auf die Darstellung in Uhrzeigerrichtung - gedreht. Dies führt zu einer gegenläufigen Drehung der beiden Getrieberäder 29, 30 in die Pfeilrichtungen b, c.

Über die Getrieberäder 29, 30 werden die Abtriebsräder 31, 32 und entsprechend die Pressmatrizen 23, 24 in wiederum entgegengesetzte Richtung d, e drehverlagert, was unter Abgleiten der Beaufschlagungsflächen 54 und 56 an den zugeordneten Formschlussflächen 60, 63 zu einer zwangsgeführten Querverlagerung der Pressmatrizen 23, 24 führt. Diese Querverlagerung ist überlagert von der Drehverlagerung der Pressmatrize 23, 24.

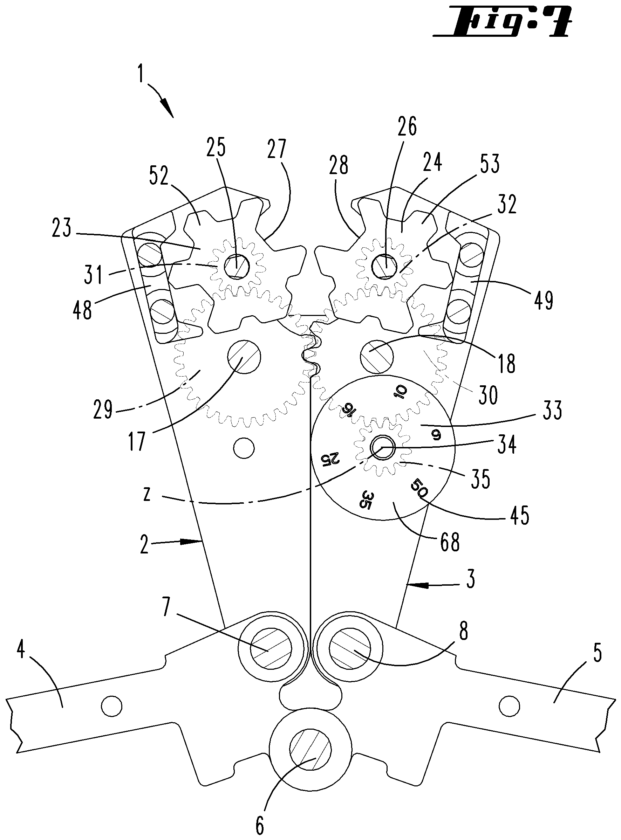

Überschreitet der in Drehrichtung nachfolgende Vorsprung 52, 53 unter Abgleiten auf der Formschlussfläche 59, 62 eine Totpunktstellung (dargestellt in Figur 7), so bewirkt die auf die Achsen 25, 26 der Pressmatrizen 23, 24 einwirkende Federkraft eine Rückverlagerung der Pressmatrizen 23, 24 in Richtung auf die Formschlussstellung mit den Formschlussmitteln 48, 49.

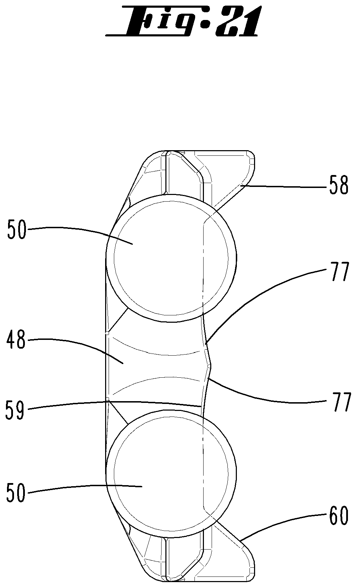

Wie in dem Ausführungsbeispiel der Figur 21 dargestellt, kann die diesbezügliche Formschlussfläche 59 bzw. 62 mit zwei, dachartig zueinander ausgerichteten Gleitflächen 77 versehen sein. Die Formschlussfläche 59, 62 ist so bevorzugt auf Höhe einer die Matrizendrehachsen y verbindenden Linie in Richtung auf die Matrize 23, 24 weisend ausgespitzt. Die Gleitflächen 77 sind mit Bezug auf eine Draufsicht einem Kurvenabschnitt angepasst ausgebildet, sodass sich ausgehend von einem Ende eine Formschlussfläche 59, 62 zunächst eine ansteigende und anschließend eine abfallende Fläche ergibt.

Die Pressmatrize 23, 24 erfährt hierdurch mit Überschreiten bzw. Erreichen der Totpunktstellung, bedingt durch die auf sie einwirkende Federkraft, einen Drehimpuls in Richtung auf die nächste Formschlussstellung bzw. vor Erreichen der Totpunktstellung (bei Fortfall der auf die Matrize einwirkenden Drehkraft) einen Rück-Drehimpuls in Richtung auf die vorherige Formschlussstellung. Einem ungewollten Verbleib der Pressmatrize 23, 24 in der Totpunktstellung und eine Selbsthemmung ist so entgegengewirkt.

Die nunmehr in Arbeitsstellung sich befindliche Pressmulde 27, 28 ist bezüglich ihrer Nennweite auf dem gesonderten Teil 33 ablesbar.

Weisen die Beaufschlagungsflächen 54, 56 und die dazugehörigen Formschlussflächen 58, 60 und 61, 63 gleiche spitze Winkel zu der Geraden A auf, so ist ein Wechsel der Pressmulden 27, 28 erreichbar durch Drehen des gesonderten Teiles 33 in die eine oder auch in die andere Richtung, in Pfeilrichtung a oder entgegengesetzt.

Es kann auch nur eine Drehrichtung vorgegeben sein, indem einer der vorbeschriebenen Winkel der Beaufschlagungsflächen und Formschlussflächen einen vergleichsweise kleinen spitzen Winkel aufweist und somit einen nicht überlaufbaren Anschlag ausbilden.

Auch kann eine Verstellung der Pressmatrizen 23, 24 bei geöffneten Pressbacken 2, 3 durch unmittelbares Erfassen einer der Pressmatrizen 23 oder 24 erfolgen (dies ggf. unter Fortlassung des scheibenförmigen gesonderten Teils 33). Die Bewegung der einen Pressmatrize 23 führt über das vorgesehene Getriebe zur synchronen Bewegung der anderen Pressmatrize.

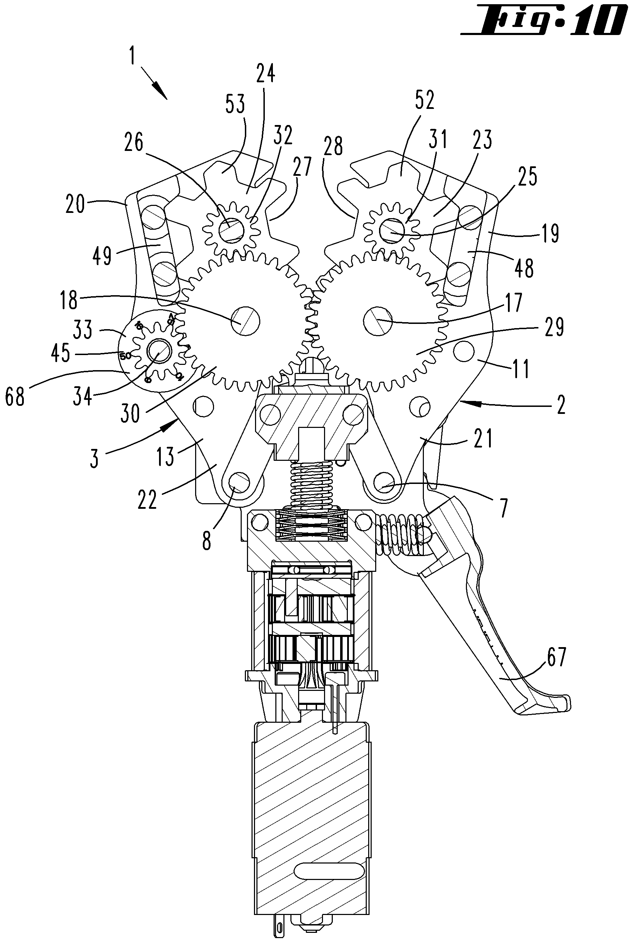

In Figur 10 ist eine elektrisch betätigbare Presszange 1 dargestellt, bei welcher die Pressbacken 2, 3 über einen elektromotorisch betätigbaren Stößel in die Verpressstellung und zurück bewegt werden. Ausgelöst wird der Verpressvorgang über einen fingerbetätigbaren Hebel 67.

Die Presszange gemäß der Darstellung in Figur 10 weist ein vorbeschriebenes Getriebe zur Kopplung der Pressmatrizen 23, 24 auf, sowie ein scheibenförmiges gesondertes Teil 33 zur von-Hand-Verstellung der Pressmatrizen. Auf dem gesonderten Teil 33 sind Ziffern 45 aufgetragen bzw. in das Teil eingelassen, zur Angabe der eingestellten Nennweite der Pressmulden 27, 28.

Die Wirkungsweise bzgl. der Verstellung der Pressmatrizen 23, 24 ist gleich der der handbetätigbaren Presszange 1.

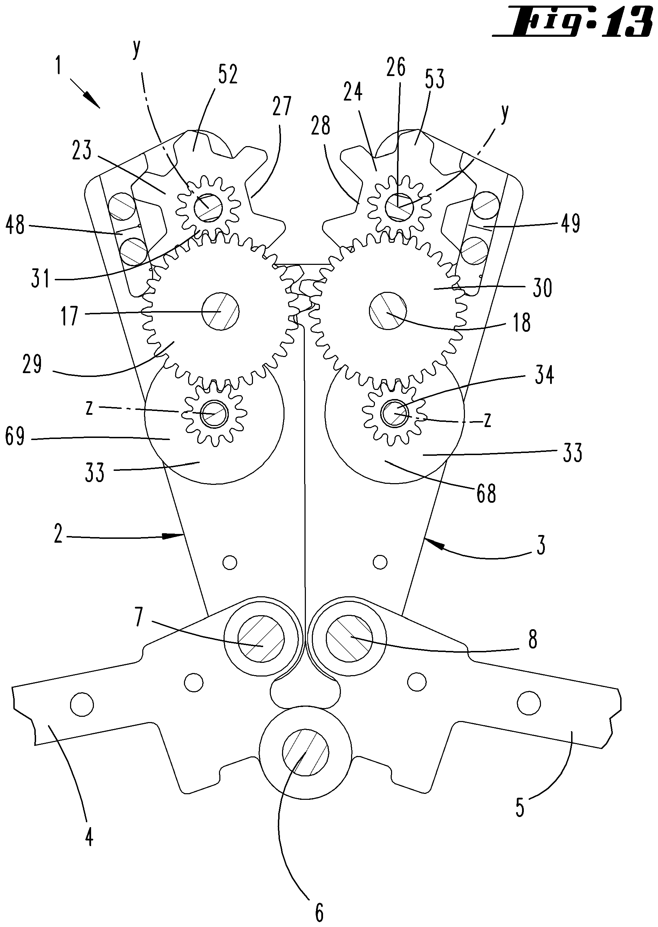

In Figur 13 zeigt eine weitere Ausführungsform einer Presszange 1, bei welcher an jeder Pressbacke 2, 3 ein Einstellrad 68, 69 angeordnet ist. Auch hier erstreckt sich die Drehachse z eines jeden Einstellrades 68, 69 parallel und in Längserstreckungsrichtung der Pressbacke 2, 3 versetzt angeordnet zur Drehachse y der zugeordneten Pressmatrize 23, 24.

Die Einstellräder 68, 69 sind über Getrieberäder 29, 30 getriebemäßig mit der zugeordneten Pressmatrize 23, 24 gekoppelt.

Die Getrieberäder 29, 30 sind in dieser Ausführungsform so angeordnet, dass deren Zahnkränze in keiner Schwenkstellung der Pressbacken 2, 3 miteinander kämmen.

Die Einstellung eines angepassten Pressmaules erfolgt in dieser Ausführungsform durch einzelnes Verstellen beider Pressmatrizen 23, 24 über das jeweilige Einstellrad 68, 69.

Die Verstellung der Pressmatrizen 23, 24 erfolgt auch hier durch Angriff in einen zu den Pressmatrizen 23, 24 beabstandeten Bereich, insbesondere zufolge Drehverlagerung des zugeordneten Einstellrades 68, 69.

Auch bietet sich hier die vorteilhafte Möglichkeit, die Pressmaul-Zahlen 45 auf den Einstellrädern 68, 69 zu platzieren.

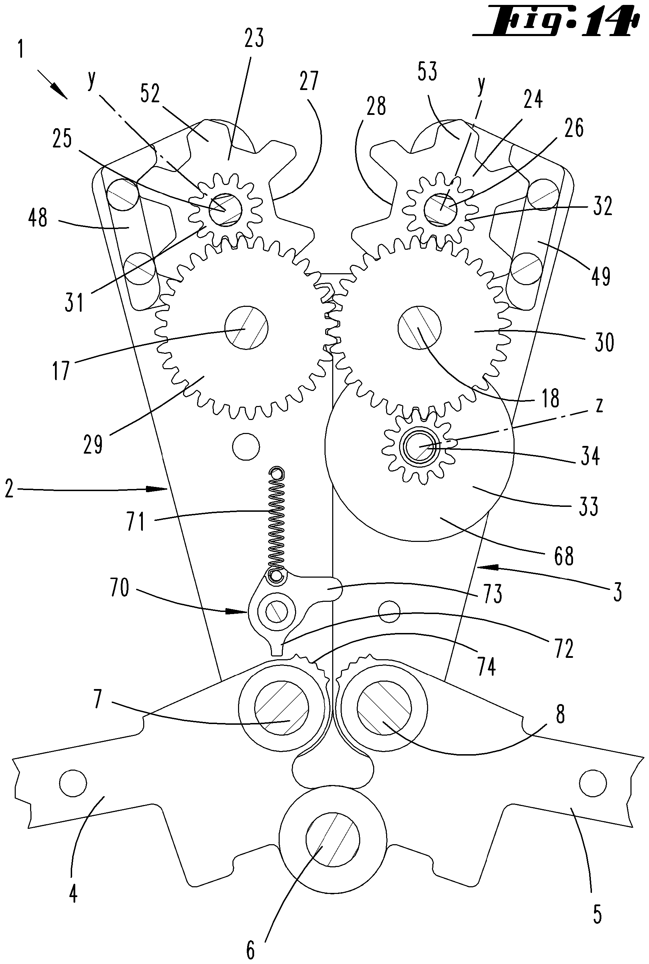

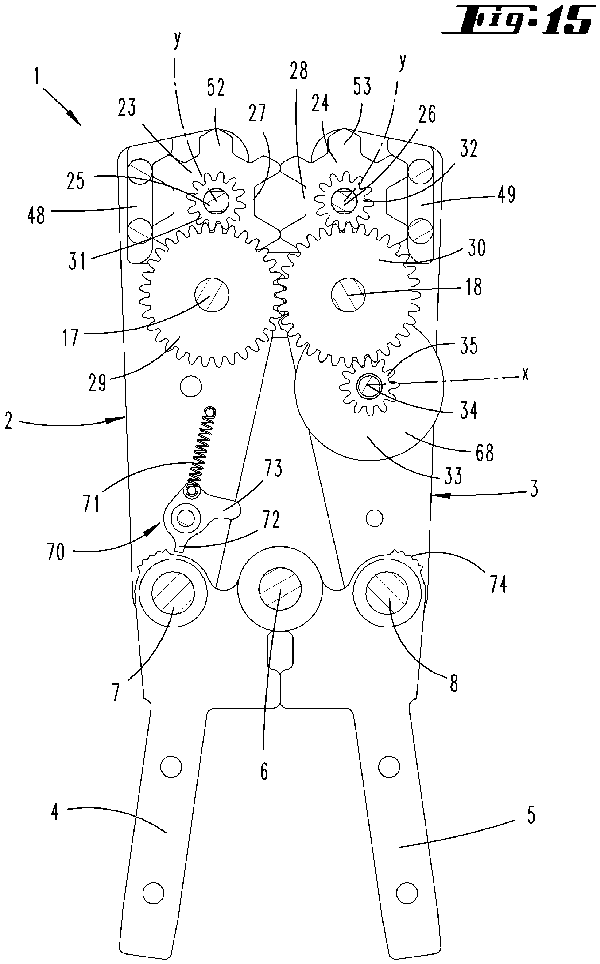

Die Figuren 14 und 15 zeigen eine Ausführungsform mit einer Synchronverstellung der Pressmatrizen 23, 24, bspw. gemäß der ersten Ausführungsform.

Eine der Pressbacken, hier die Pressbacke 2, trägt eine um eine parallel zur Schwenkachse der Pressbacke 2 drehgelagerte Sperrklinke 70. Diese ist über eine ebenfalls an der Pressbacke 2 andern Ends gehalterte Zugfeder 71 in eine Grundstellung gemäß Figur 14 belastet.

Die Sperrklinke 70 weist eine Klinkennase 72 auf. Diese weist in Grundausrichtung gemäß Figur 14 in Richtung auf die vom Bolzen 7 durchsetzte Anlenkstelle des Handgriffes 4 an der Pressbacke.

Weiter ist an der Sperrklinke 70 ein Radial-Ausleger angeformt. Diese seitlich in Richtung auf die andere Pressbacke 3 weisende Nase 73 dient als Notauslöser.

Im Bereich der vom Bolzen 7 durchsetzten Anlenkstelle des Handgriffes 4 ist koaxial zum Bolzen 7 bzw. zu dessen Bolzenachse ein Zahnradsegment 74 ausgebildet, zur Zusammenwirkung mit der Klinkennase 72.

Die Sperrklinke 70 ist zwischen den Backenplatten 11, 12 der Pressbacke 2 liegend angeordnet und greift in einer Offenstellung der Presszange 1 gemäß Figur 14 in einen nicht verzahnten Bereich der Anlenkstelle.

Mit Verschwenken der Handgriffe 4 und 5, zum verpressenden Schließen der Presszange 1 greift die Klinkennase 72 in das Zahnradsegment 74 sperrend ein, sodass aus dieser Position heraus allein eine weitere Verlagerung des Handgriffes 4 in Richtung auf den anderen Handgriff 5 durchführbar ist.

Eine solche Zwangssperre stellt sicher, dass bei der Herstellung einer Pressverbindung stets der volle Pressdruck ausgeübt werden muss.

Mit Erreichen der Pressstellung hat die Klinkennase 72 das Zahnradsegment 74 überlaufen und liegt hiernach wieder in ihrer gestreckten Ausgangsposition (vgl. Figur 15), sodass mit ratschenartigem Überlaufen ein Öffnen der Handgriffe 4, 5 bzw. ein Öffnen der Presszange 1 ermöglicht ist.

Im Notfall kann über die Nase 73 die Sperrklinke 70 durch den Benutzer in eine Nicht-Eingriffsstellung verlagert werden, sodass auch ohne Vollendung einer Verpressung ein Öffnen der Presszange 1 möglich ist.

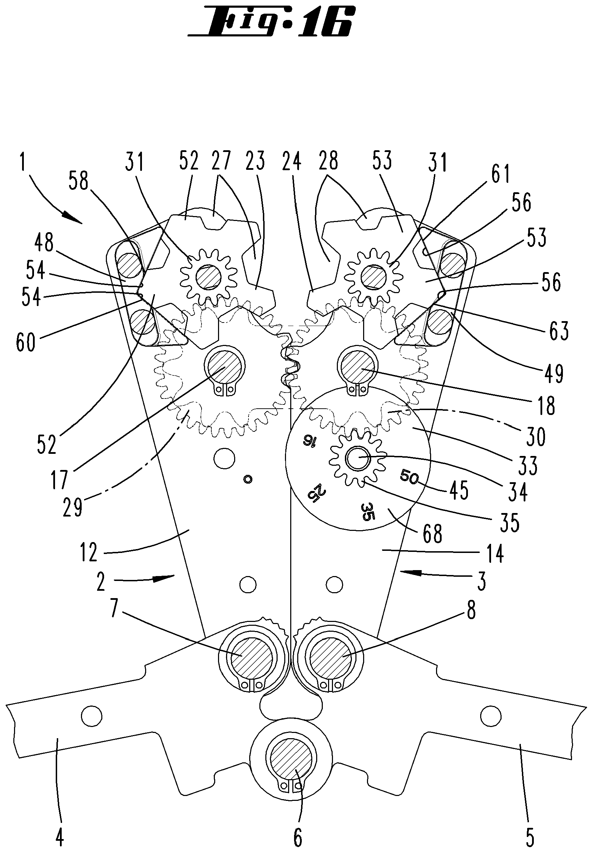

Figur 16 zeigt eine alternative Ausführungsform mit Pressmatrizen 23, 24, welche jeweils mit Bezug auf den Grundriss bezüglich ihrer Außenkontur ein regelmäßiges Fünfeck zeichnen.

Entsprechend sind über den Umfang, mittig den Längsrandkanten zugeordnet fünf Pressmulden 27, 28 vorgesehen. In Umfangsrichtung erstrecken sich zwischen diesen die Vorsprünge 52, 53.

Der der in Arbeitsstellung befindlichen Pressmulde 27, 28 diametral gegenüberliegende Vorsprung 52, 53 dient in Zusammenwirkung mit dem Formschlussmittel 48, 49 der Rastsicherung der Pressmatrize 23, 24 in der Arbeitsstellung.

Hierzu taucht der Vorsprung 52, 53 mit seinem die Beaufschlagungsflächen 54 und 56 aufweisenden Spitzenbereich in eine kerbartige Vertiefung des Formschlussmittels 48, 49 ein, welche kerbartige Vertiefung die diesbezüglichen Formschlussflächen 58, 60 bzw. 61, 63 bilden.

Die Formschlussflächen 58, 60 bzw. 61, 63 erstrecken sich mit Bezug auf den Grundriss gemäß Figur 16 über die den eingefangenen Vorsprung 52, 53 benachbarte Pressmulde 27, 28 hinaus. Weiter bevorzugt erfolgt noch eine Abstützung der Beaufschlagungsflächen der in Drehrichtung der Pressmatrize 23, 24 vorlaufenden bzw. nachlaufenden Vorsprungs 52, 53.

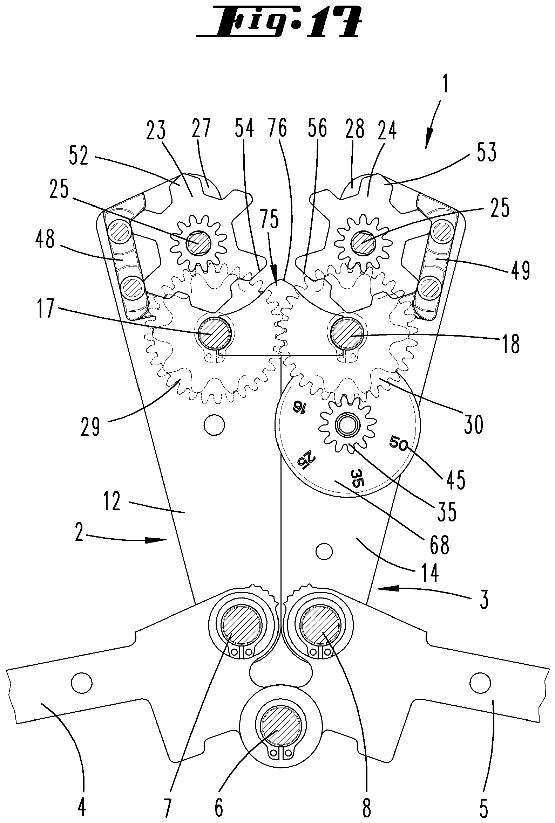

In der Ausführungsform gemäß den Figuren 17 bis 19 ist, basierend auf einer Presszange gemäß den Darstellungen in den Figuren 1 bis 6, ein Lehrenteil 75 vorgesehen. Dieses ist bevorzugt ein Plattenteil mit einem im Wesentlichen dreieckförmigen Grundriss gemäß der Darstellung in Figur 17.

Das Lehrenteil 75 erstreckt sich bevorzugt zwischen den Backenplatten, so entsprechend bevorzugt in der Ebene der Pressmatrizen 23 und 24. Das Lehrenteil 75 kann eine in Achsrichtung der Pressmatrizen 23 und 24 betrachtete Dicke aufweisen, die der der Pressmatrizen 23, 24 entspricht.

Weiter ist das Lehrenteil 75 in der dargestellten Ausführungsform im Bereich zweier Dreieckspitzen von den Achsbolzen 17 und 18 durchsetzt und somit gehaltert.

Es ergibt sich eine dreieckförmige Spitze 76 des Lehrenteils 75, welche Spitze in das Maul der Presszange 1 hineinragt, in welches Maul zugleich auch bei ordungsgemäßer Ausrichtung der Pressmatrizen 23 und 24 die in Arbeitsstellung befindlichen Pressmulden 27, 28 ragen.

Die Flanken der Spitzen 76 sind angepasst an die Außenkontur der Vorsprünge 52 und 53, insbesondere angepasst an die Beaufschlagungsflächen 55 und 57.

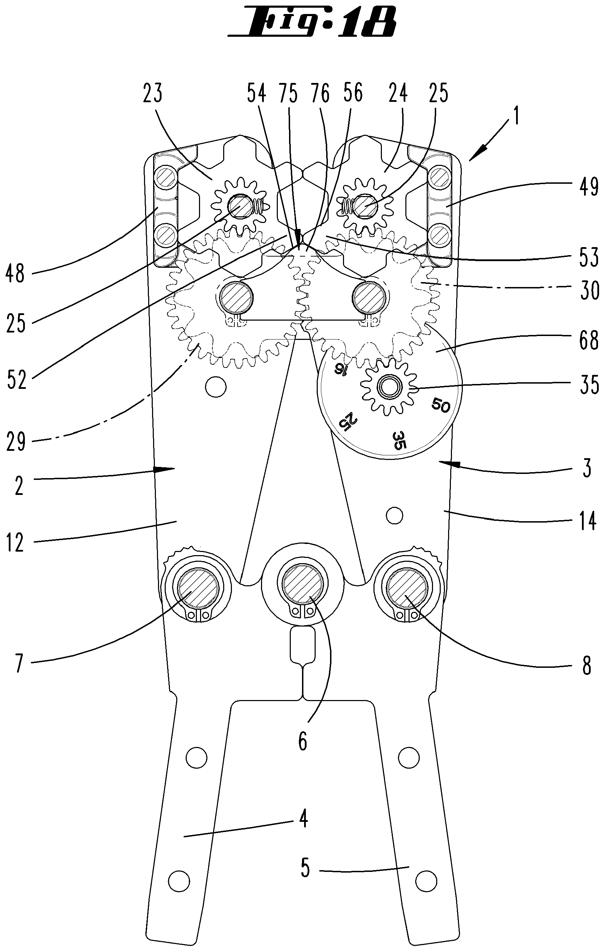

Die Beaufschlagungsflächen 55, 57 zwei in Arbeitsstellung gegeneinander tretender Vorsprünge 52, 53 schließen in der Pressstellung gemäß Figur 18 einen stumpfen Winkel von bspw. 120 Grad ein, der dem eingeschlossenen Winkel der spitzen Flanken des Lehrenteils 75 entspricht.

Bei korrekter und rastgesicherter Ausrichtung der Pressmatrizen 23 und 24 gemäß der Darstellung in Figur 17 ist ein Schließen der Pressbacken 2 und 3 möglich. Die im Wesentlichen aufeinander zu weisenden Beaufschlagungsflächen 55, 57 der in Pressstellung aneinander liegenden Vorsprünge 52 und 53 stützen sich ggf. an den spitzen Flanken des Lehrenteils 75 ab.

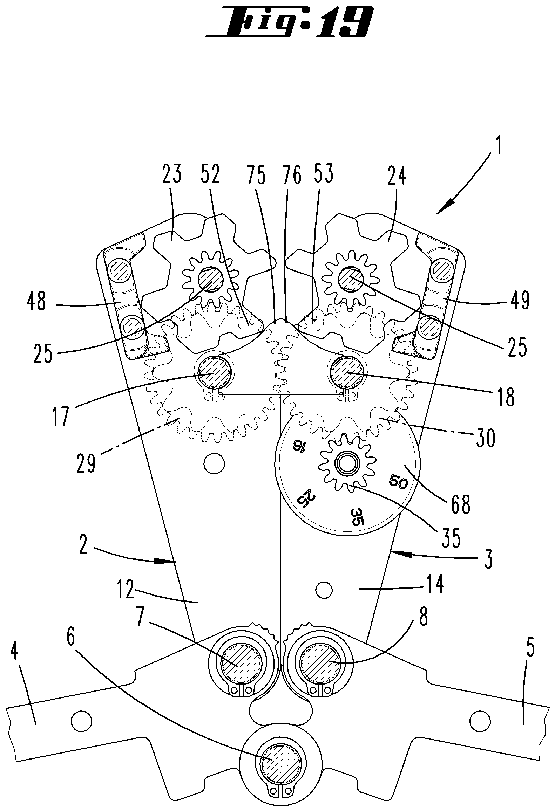

Sind hingegen die Pressmatrizen 23 und 24 nicht in ihrer finalen und bevorzugt rastgesicherten Stellung gänzlich verlagert (vgl. Figur 19) so trifft im Zuge der Zangenschließbewegung zumindest einer der Vorsprünge 52, 53 gegen die zugewandte Flanke der Lehrenteil-Spitze 76. Dies kann zu einer Unterbindung der Zangenschließbewegung führen, zufolge Sperren.

Die sich an den Spitzenbereich anschließenden Flanken des Lehrenteils 75 sind vom Lehrenteil 75 nach außen betrachtet bevorzugt konkav geformt. Dies bietet eine gesteuerte Führung des bei nicht korrekt eingestellter Pressmatrize im Zuge der Zangenschließbewegung auftreffenden Vorsprungs 53, 53 bevorzugt in Richtung der üblichen Drehverlagerungsrichtung der Pressmatrize 23, 24 bis zum Erreichen der Arbeitsstellung.

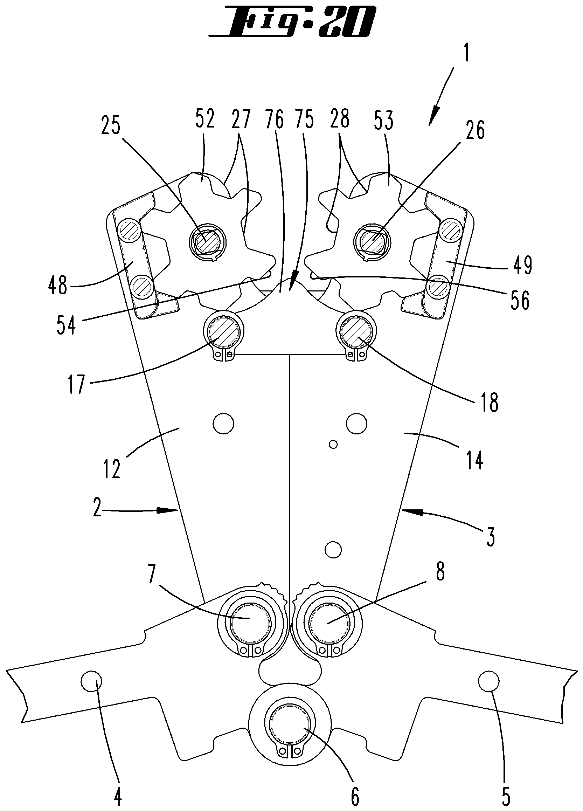

Figur 20 zeigt eine Ausführungsform mit einem Lehrenteil 75 der vorbeschriebenen Art, bei welcher Presszange 1 die Pressmatrizen 23 und 24 einzeln und unmittelbar von Hand verstellbar sind.

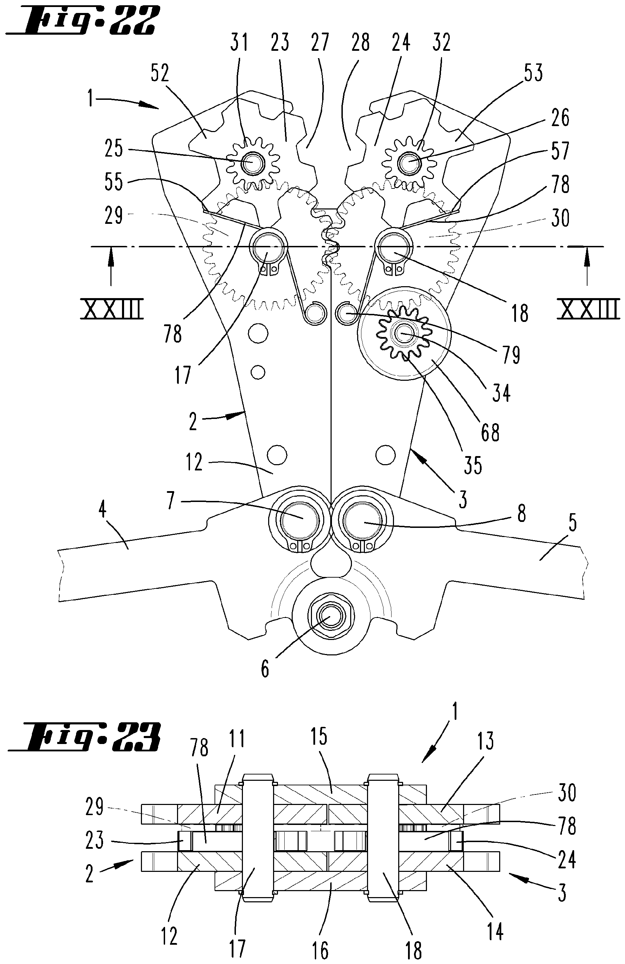

Die Figuren 22 und 23 zeigen eine weitere Ausführungsform einer Presszange 1 mit über Getrieberäder 29 und 30 und bevorzugt einem Stellrad 68 synchron verstellbaren Pressmatrizen 23 und 24.

Die Pressmatrizen 23 und 24 sind in dieser Ausführungsform um feststehende, entsprechend bevorzugt nicht quer zur Achse y verlagerbaren Achsen 25 und 26 drehgelagert.

Eine insbesondere über das Einstellrad 68 und die Getrieberäder 29, 30 gefundene Pressstellung der Pressmatrizen 23, 24 ist auch in dieser Ausführungsform gesichert. Hierzu ist jeder Pressmatrize 23, 24 eine Feder 78 in Form einer Blattfeder zugeordnet. Die Feder 78 ist im Bereich eines Endes an einem Halterungszapfen 79 festgesetzt, welcher Halterungszapfen 79 an der zugeordneten Pressbacke 2, 3 insbesondere zwischen den zugehörigen Backenplatten gehaltert ist. Die Feder 78 erstreckt sich ausgehend von dem Halterungszapfen 79 in Richtung auf die zugehörige Pressmatrize 23, 24, hierbei den Achsbolzen 17,18 unter federnder Biegung des zugeordneten Getrieberades 29, 30 teilweise umgebend, womit eine entsprechende Abstützung der Feder 78 mit einer ihrer Breitseiten an dem Achsbolzen erreicht ist.

Das dem Halterungsende abgewandte Ende der Feder 78 erstreckt sich nach dem Abstützungsbereich an dem Achsbolzen 17,18 in eine Richtung abgewandt der in Pressstellung befindlichen Pressmulde 27, 28.

Die Feder 78 stützt sich mit ihrem freien, über den Achsbolzen 17,18 gespannten Bereich an den zugewandten Beaufschlagungsflächen 55 bzw. 57 zweier in Verdrehrichtung der Pressmatrize 23, 24 aufeinander folgenden Vorsprüngen 52, 53 ab. Durch die auf die Vorsprünge 52, 53 wirkende Federkraft ist eine Formschluss-Zusammenwirkung zur Sicherung der Pressmatrize 23, 24 in der gefundenen Pressstellung erreicht. Eine Verdrehung der Pressmatrize 23, 24 erfolgt zwangsläufig gegen die (in Bezug auf die Darstellung in Figur 22) entgegen Uhrzeigerrichtung wirkende Kraft der Feder 78. Mit Drehen der Pressmatrize 23, 24 wird der freie Federschenkel weiter ausgelenkt.

Die in der Richtung der Drehachse y der Pressmatrize 23, 24 betrachtete Breite der Blattfeder entspricht bevorzugt der in dieselbe Richtung betrachteten Höhe der mit der Feder 78 zusammenwirkenden Beaufschlagungsflächen und somit weiter bevorzugt der in Achsrichtung weiter betrachteten Materialstärke der Pressmatrize 23, 24 im Bereich der Vorsprünge 52, 53.

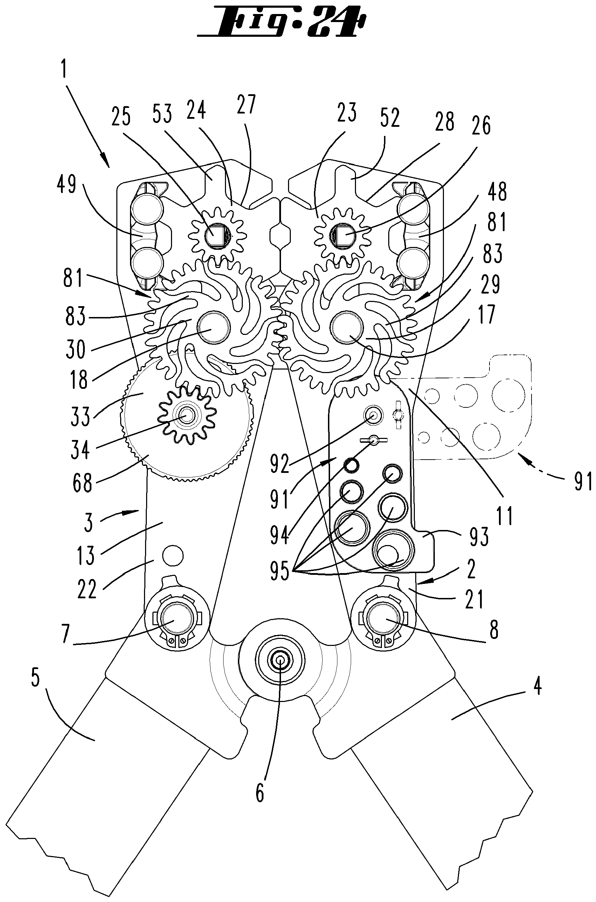

Figur 24 zeigt eine weitere Ausführungsform der Presszange 1. Auch bei dieser sind die Pressmatrizen 23, 24 gemeinsam und synchron über Getrieberäder 29, 30 verstellbar, wozu weiter ein auf ein Getrieberad einwirkendes Einstellrad 68 vorgesehen ist.

Die Getrieberäder 29, 30 sind gleich ausgebildet.

Weiter sind die Getrieberäder 29, 30 elastisch ausweichbar ausgebildet. Hierzu sind die Verzahnungszähne 80 eines jeden Getrieberades 29, 30 in Gruppen 81 zu je vier in Umfangsrichtung aufeinander folgende Verzahnungszähne 80 aufgeteilt.

Die Verzahnungszähne 80 einer Gruppe 81 sind an einem Halterungsteil 82 ausgebildet. Von diesem setzt sich materialeinheitlich und einstückig ein federbarer Ast 83 fort, welcher an einem radial inneren, ebenfalls materialeinheitlichen und einstückigen Bereich 84 des Getrieberades 29, 30 angebunden ist.

Das Getrieberad 29, 30 oder auch Zahnrad 86 weist über den Umfang gleichmäßig verteilt acht Gruppen je vier Verzahnungszähne 80 auf, welche acht Gruppen 81 über jeweils einen Ast 83 mit dem inneren Bereich 84 verbunden sind.

Die Äste 83 sind mit Bezug auf eine Radiale r (bezogen auf die geometrische Drehachse des Getrieberades 29, 30 bzw. des Zahnrades 86), welche Radiale r das Halterungsteil 82 in dessen Umfangserstreckung mittig durchsetzt, außermittig an dem Halterungsteil 82 angebunden. Bevorzugt ist die Anbindung des Astes 83 in Umfangsrichtung endseitig des Halterungsteiles 82 ausgebildet.

Jeweils ein Verzahnungszahn 80 kann den Endbereich des Halterungsteiles 82 ausformen. Die Radiale r kann mittig durch eine zwischen den mittleren Verzahnungszähnen 80 gebildete Zahnlücke verlaufen.

Ausgehend von der Anbindung an dem Halterungsteil 82 verläuft jeder Ast 83 mit Bezug auf eine Draufsicht gemäß Figur 24 kurvenabschnittförmig, sich hierbei ausgehend von dem Halterungsteil 82 von diesem in Umfangsrichtung entfernend und die in Umfangsrichtung benachbarte Gruppe 81 bzw. des Halterungsteil 82 radial innen hintergreifend.

Die Anbindung des Astes 83 an den radial inneren Bereich 84 kann so gewählt sein, dass eine diesen Anbindungsbereich mittig durchsetzende Radiale zumindest etwa den Astanbindungsbereich an dem Halterungsteil 82 der in Umfangsrichtung benachbarten Gruppe 81 zugleich schneidet.

Zufolge der vorbeschriebenen Ausgestaltung des Getrieberades 29, 30 bzw. Zahnrades 86 ist eine federnde Ausweichbarkeit einer in Eingriff stehenden Gruppe 81 von Verzahnungszähnen 80 gegeben, dies selbst bei zentraler, insbesondere streng radialer Beaufschlagung, wobei eine federnde Wirkung sowohl in radialer als auch in Umfangsrichtung erreicht werden kann.

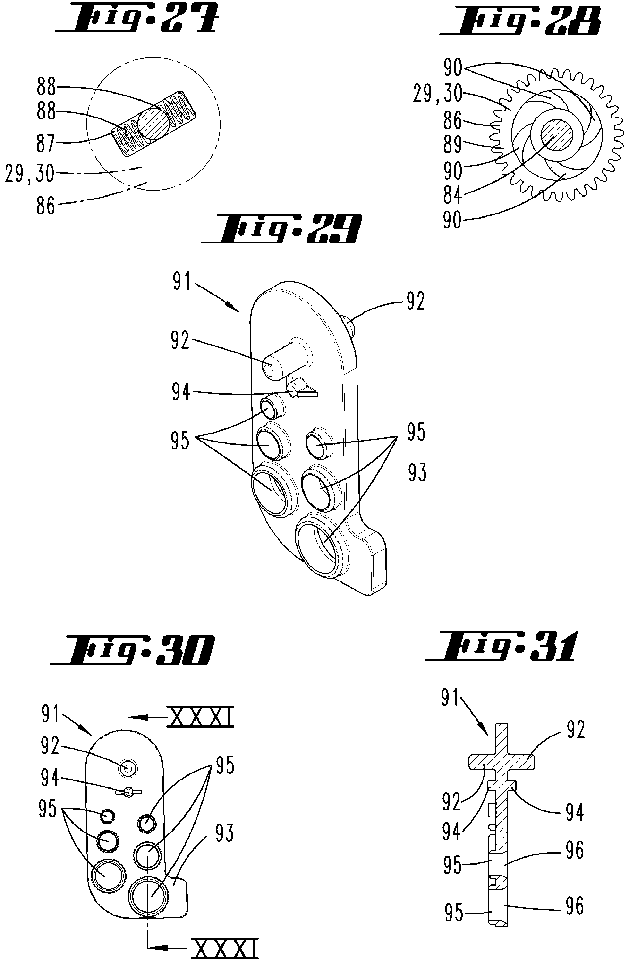

Alternativ kann eine federnde Wirkung auch durch Ausbildung des Zahnrades 86 bspw. des Getrieberades 29, 30 aus einem nachgiebigem Werkstoff erreicht sein, weiter bspw. durch Ausbildung desselben aus einem Gummiwerkstoff. Auch kann eine federbare Verschiebung wie beispielhaft und schematisch in Figur 27 dargestellt vorgesehen sein. So kann der Achsbolzen 17,18 in einem Langloch einer Backenplatte geführt sein und durch Druckfedern 88 in eine zentrale Arbeitsposition belastet sein.

Weiter alternativ kann das Zahnrad 86, wie bspw. das Getrieberad 29, 30, darüber hinaus aber auch das Einstellrad 68, 69 durch einen umlaufenden Zahnkranz 89 gebildet sein, der über elastisch federbare, in Draufsicht kreisabschnittförmig verlaufende Federarme 90 an den inneren Bereich 84 angebunden ist (vgl. Figur 28).

Um den zu verpressenden Leiter hinsichtlich der Pressmuldengröße klassifizieren zu können, kann ein lehrenartiges Bestimmungsteil 91 vorgesehen sein. Dieses ist plattenförmiger Gestalt, bspw. bestehend aus einem Hartkunststoff, alternativ aus einem Metallwerkstoff.

Das Bestimmungsteil 91 kann schwenkbar an der Presszange 1 angeordnet sein, insbesondere zwischen den Backenplatten 11, 12.

Das Bestimmungsteil 91 kann einstückig angeformte Drehzapfen 92 aufweisen, die in entsprechenden Bohrungen oder Senkungen der Backenplatten 11, 12 einsitzen. Die hieraus resultierende geometrische Drehachse verläuft parallel zu den Achsen y der Pressmatrizen 23, 24.

Das Bestimmungsteil 91 ist so aus einer Nichtgebrauchsstellung, in welcher dieses zwischen den in Überdeckung angeordneten Backenplatten 11, 12 angeordnet ist in eine in Figur 24 strichpunktiert dargestellte Nutzungsstellung ausklappbar.

Zum Ergreifen des Bestimmungsteiles 91 ist ein auch in der Nichtbenutzungsstellung über die zugewandten Randkanten der Backenplatten 11, 12 frei hinaus abragender Greifabschnitt 93 ausgeformt.

Darüber hinaus können an beiden Breitseitenflächen des Bestimmungsteiles 91 nahe den Drehzapfen 92 Reibvorsprünge 94 vorgesehen sein, die das Bestimmungsteil 91 in der Nichtbenutzungsstellung zufolge Reibschluss mit den zugewandten Flächen der Backenplatten 11, 12 halten.

Weiter weist das Bestimmungsteil 91 mehrere, die Breitseitenflächen des Bestimmungsteiles 91 durchsetzende Durchlassöffnungen 95 auf. Bevorzugt ist die Anzahl von Durchlassöffnungen 95 angepasst an die Anzahl von Pressmulden 27, 28 der Pressmatrizen 23, 24.

Jede Durchlassöffnung 95 weist einen engsten Querschnitt auf, insbesondere im Bereich einer ringkragenartigen Erweiterung im Bereich einer Breitseitenfläche des Bestimmungsteiles 91, welcher engste Querschnitt einem Nenndurchmesser eines elektrischen Leiters entspricht.

Zugeordnet zu den Durchlassöffnungen 95 können breitseitenflächig auf dem Bestimmungsteil 91 Angaben zu den Pressmulden 27, 28 vorgesehen sein, die den Einstellangaben auf dem Einstellrad 68 oder unmittelbar auf den Presssmatrizen 23, 24 entsprechen. Es ist so eine eindeutige Klassifizierung des elektrischen Leiters und somit des zu verpressenden Kabelschuhs oder dergleichen, wie auch weiter der einzustellenden Pressmulden 27, 28 ermöglicht.

Zum erleichterten Einführen des elektrischen Leiters in die Durchlassöffnung 95 weist diese zumindest einseitig einen einführtrichterartigen Abschnitt 96 auf. Dieser ist bevorzugt auf der dem Ringkragen gegenüberliegenden Breitseite des Bestimmungsteiles 91 ausgebildet.

**Bezugszeichenliste:**

| | | | | | |
|---|---|---|---|---|---|
| 1 | Presszange | 31 | Abtriebsrad | 61 | Formschlussfläche |
| 2 | Pressbacke | 32 | Abtriebsrad | 62 | Formschlussfläche |
| 3 | Pressbacke | 33 | Teil | 63 | Formschlussfläche |
| 4 | Handgriff | 34 | Achsbolzen | 64 | Langloch |
| 5 | Handgriff | 35 | Antriebsrad | 65 | Langloch |
| 6 | Gelenkzapfen | 36 | Zylinderabschnitt | 66 | Feder |
| 7 | Bolzen | 37 | Zylinderabschnitt | 67 | Hebel |
| 8 | Bolzen | 38 | Zylinderabschnitt | 68 | Einstellrad |
| 9 | Federring | 39 | Zylinderabschnitt | 69 | Einstellrad |
| 10 | Federring | 40 | Zylinderabschnitt | 70 | Sperrklinke |
| 11 | Backenplatte | 41 | Abtriebsriemen | 71 | Zugfeder |
| 12 | Backenplatte | 42 | Abtriebsriemen | 72 | Klinkennase |
| 13 | Backenplatte | 43 | Antriebsriemen | 73 | Nase |
| 14 | Backenplatte | 44 | Transmissionsriemen | 74 | Zahnradsegment |
| 15 | Lasche | 45 | Zeichen | 75 | Lehrenteil |
| 16 | Lasche | 46 | Fenster | 76 | Spitze |
| 17 | Achsbolzen | 47 | Teil | 77 | Gleitfläche |
| 18 | Achsbolzen | 48 | Formschlussmittel | 78 | Feder |
| 19 | Hebelarm | 49 | Formschlussmittel | 79 | Halterungszapfen |
| 20 | Hebelarm | 50 | Fortsatz | 80 | Verzahnungszahn |
| 21 | Hebelarm | 51 | Fortsatz | 81 | Gruppe |
| 22 | Hebelarm | 52 | Vorsprung | 82 | Halterungsteil |
| 23 | Pressmatrize | 53 | Vorsprung | 83 | Ast |
| 24 | Pressmatrize | 54 | Beaufschlagungsfläche | 84 | Innerer Bereich |
| 25 | Achse | 55 | Beaufschlagungsfläche | 85 | Schlitz |
| 26 | Achse | 56 | Beaufschlagungsfläche | 86 | Zahnrad |
| 27 | Pressmulde | 57 | Beaufschlagungsfläche | 87 | Langloch |
| 28 | Pressmulde | 58 | Formschlussfläche | 88 | Druckfeder |
| 29 | Getrieberad | 59 | Formschlussfläche | 89 | Zahnkranz |
| 30 | Getrieberad | 60 | Formschlussfläche | 90 | Federarm |
| 91 | Bestimmungsteil | | | | |
| 92 | Drehzapfen | | | | |
| 93 | Greifabschnitt | | | | |
| 94 | Reibvorsprung | | | | |
| 95 | Durchlassöffnung | | | | |
| 96 | Abschnitt | | | | |
| | | | | | |
| A | Gerade | | | | |
| α | Winkel | | | | |
| a | Pfeil | | | | |
| b | Pfeil | | | | |
| c | Pfeil | | | | |
| d | Pfeil | | | | |
| e | Pfeil | | | | |
| r | Radiale | | | | |
| x | Achse | | | | |
| y | Achse | | | | |
| z | Achse | | | | |

## Patentansprüche

1. Presszange (1), insbesondere zum Aufpressen von Kabelschuhen oder dergleichen auf elektrische Leiter, mit zwei gegeneinander verschwenkbaren Pressbacken (2, 3) wobei in jeder Pressbacke (2, 3) jeweils eine über einen Umfang bezgl. einer Drehachse (y) mit mehreren unterschiedlichen Pressmulden (27, 28) ausgebildete Pressmatrize (23, 24) drehbar gelagert ist, **dadurch gekennzeichnet, dass** die Pressmatrizen (23, 24) unabhängig von einer Schwenkstellung der Pressbacken (2, 3) ständig getriebemäßig gekoppelt sind.

2. Presszange nach Anspruch 1, **dadurch gekennzeichnet, dass** eine Pressmatrize (23, 24) mittels eines Getrieberades (29, 30) quer zu der Drehachse (y) bewegbar ist.

3. Presszange nach einem der vorhergehenden Ansprüche, **dadurch gekennzeichnet, dass** eine Pressmatrize (23, 24) mittels eines Getrieberades (29, 30) aus einer ersten durch Formschluss gesicherten Pressstellung in eine zweite durch Formschluss gesicherte Pressstellung bewegbar ist.

4. Presszange nach einem der vorhergehenden Ansprüche, **dadurch gekennzeichnet, dass** eine Pressmatrize (23, 24) zur Versetzung einer anderen Pressmulde (27, 28) in eine Arbeitsstellung mittels einer Getriebeeinwirkung gegen eine die Pressmatrize (23, 24) in eine formschlussgesicherte Arbeitsstellung beaufschlagende Kraft unter einer Bewegung quer zur ihrer Drehachse (y) verstellbar ist.

5. Presszange nach einem der vorhergehenden Ansprüche, **dadurch gekennzeichnet, dass** jede Pressmatrize (23, 24) über ein mit dieser getriebemäßig gekoppeltes Einstellrad (68, 69) verstellbar ist, wobei das Einstellrad (68, 69) und die Pressmatrize (23, 24) unterschiedliche Drehachsen (y, z) aufweisen.

6. Presszange nach Anspruch 5, **dadurch gekennzeichnet, dass** die Drehachsen (y, z) parallel zueinander verlaufen.

7. Presszange nach einem der Ansprüche 5 oder 6, **dadurch gekennzeichnet, dass** eine Pressbacke (2, 3) eine Längsrichtung aufweist, von einer Anscharnierung griffseitig bis zu einem freien Ende, und dass die Drehachsen (y, z) in Längsrichtung zueinander versetzt sind.

8. Presszange nach einem der Ansprüche 5 bis 7, **dadurch gekennzeichnet, dass** das Einstellrad (68, 69) über ein Getrieberad (29, 30) auf die Pressmatrize (23, 24) einwirkt.

9. Presszange nach einem der Ansprüche 5 bis 8, **dadurch gekennzeichnet, dass** die Pressmatrize (23, 24) um eine feststehende Achse (25, 26) drehbar ist-.

10. Presszange nach einem der Ansprüche 5 bis 9, **dadurch gekennzeichnet, dass** die Pressmatrize (23, 24) in einer Pressstellung durch eine Formschluss-Zusammenwirkung mit einer Feder (78) gesichert ist, wobei, bevorzugt, die Feder (78) eine Blattfeder ist.

11. Presszange nach Anspruch 10, **dadurch gekennzeichnet, dass** die Feder (78) an der Achse (17, 18) eines Getrieberades abgestützt ist.

12. Presszange nach einem der vorhergehenden Ansprüche, **dadurch gekennzeichnet, dass** eine oder beide Pressmatrizen (23, 24) über ein Einstellrad (68, 69) ggf. unter Zwischenschaltung eines Getrieberades (29, 30) verstellbar sind und dass ein Getrieberad (29, 30) und/oder das Einstellrad (68, 69) ganz oder teilweise elastisch ausweichbar gebildet ist.

13. Presszange nach Anspruch 12, **dadurch gekennzeichnet, dass** das Getrieberad (29, 30) und/oder das Einstellrad (68, 69) Verzahnungszähne (80) aufweist, wobei eine oder mehrere Gruppen (81) von zwei oder mehr Verzahnungszähnen (80) ausgebildet sind, wobei weiter die Verzahnungszähne (80) einer Gruppe (81) an einem gemeinsamen Halterungsteil (82) ausgebildet sind und das Halterungsteil (82) über einen einzigen federbaren Ast (83) an einem radial inneren Bereich (84) des Getrieberades (29, 30) oder Einstellrades (68, 69) angebunden ist.

14. Presszange nach Anspruch 13, **dadurch gekennzeichnet, dass** der Ast (83) in Umfangsrichtung außermittig an dem Halterungsteil (82) angebunden ist.

15. Presszange nach einem der Ansprüche 13 oder 14, **dadurch gekennzeichnet, dass** an dem Halterungsteil (82) drei, vier oder mehr Verzahnungszähne (80) ausgebildet sind.

## Claims

1. Crimping pliers (1), in particular for crimping cable lugs or the like onto electrical conductors, comprising two crimping jaws (2, 3) which can be swivelled towards one another, wherein in each crimping jaw (2, 3) a crimping matrix (23, 24) configured with a plurality of different crimping dies (27, 28) over a circumference is rotatably mounted with respect to an axis of rotation (y), **characterized in that** the crimping matrices (23, 24) are permanently coupled to each other via the gearing independently of a swivel position of the crimping jaws (2, 3).

2. The crimping pliers according to claim 1, **characterized in that** a crimping matrix (23, 24) is movable by means of a gear wheel (29, 30) transversely to the axis of rotation (y).

3. The crimping pliers according to any one of the preceding claims, **characterized in that** a crimping matrix (23, 24) is movable by means of a gear wheel (29, 30) from a first crimping position protected by interlocking into a second crimping position protected by interlocking.

4. The crimping pliers according to any one of the preceding claims, **characterized in that** a crimping matrix (23, 24) can be adjusted to move another crimping die (27, 28) into a working position by means of a gear action against a force urging the crimping matrix (23, 24) into an interlocked working position accompanied by a movement transverse to its axis of rotation (y).

5. The crimping pliers according to any one of the preceding claims, **characterized in that**, **characterized in that** each crimping matrix (23, 24) is adjustable by means of an adjusting wheel (68, 69) coupled to this via the gearing, wherein the adjusting wheel (68, 69) and the crimping matrix (23, 24) have different axes of rotation (y, z).

6. The crimping pliers according to claim 5, **characterized in that** the axes of rotation (y, z) run parallel to one another.

7. The crimping pliers according to one of claims 5 or 6, **characterized in that** a crimping jaw (2, 3) has a longitudinal direction from a hinge on the handle side to a free end, and that the axes of rotation (y, z) are offset with respect to one another in the longitudinal direction.

8. The crimping pliers according to one of claims 5 to 7, **characterized in that** the adjusting wheel (68, 69) acts on the crimping matrix (23, 24) via a gear wheel (29, 30).

9. The crimping pliers according to one of claims 5 to 8, **characterized in that** the crimping matrix (23, 24) is rotatable about a fixed axis (25, 26).

10. The crimping pliers according to one of claims 5 to 9, **characterized in that** the crimping matrix (23, 24) is secured in a crimping position by a positive interaction with a spring (78) wherein preferably the spring (78) is a leaf spring.

11. The crimping pliers according to claim 10, **characterized in that** the spring (78) is supported on the axis (17, 18) of a gear wheel.

12. The crimping pliers according to any one of the preceding claims, **characterized in that** one or both of the crimping matrices (23, 24) are adjustable by means of an adjusting wheel (68, 69) optionally with an interposed gear wheel (29, 30) and that a gear wheel (29, 30) and/or the adjusting wheel (68, 69) is formed completely or partially as elastically yieldable.

13. The crimping pliers according to claim 12, **characterized in that** the gear wheel (29, 30) and/or the adjusting wheel (68, 69) have teeth (80), wherein one or several groups (81) of two or more teeth (80) are formed, wherein further the teeth (80) of one group (81) are formed on a common retaining part (82) and the retaining part (82) is connected to a radially inner region (84) of the gear wheel (29, 30) or adjusting wheel (68, 69) via a single spring-loadable branch (83).

14. The crimping pliers according to claim 13, **characterized in that** the branch (83) is connected to the retaining part (82) off-centre in the circumferential direction.

15. The crimping pliers according to claim 13 or 14, **characterized in that** three, four or more teeth (80) are formed on the retaining part (82).

## Revendications

1. Pince à sertir (1), en particulier pour presser des cosses de câble ou analogues sur des conducteurs électriques, comportant deux mâchoires de pressage (2, 3) pouvant pivoter l'une par rapport à l'autre, dans laquelle dans chaque mâchoire de pressage (2, 3) est montée de manière pivotante une matrice de pressage (23, 24) respective formée avec plusieurs creux de pressage (27, 28) différents autour d'une circonférence par rapport à un axe de rotation (y), **caractérisée en ce que** les matrices de pressage (23, 24) sont couplées cinématiquement en permanence indépendamment d'une position de pivotement des mâchoires de pressage (2, 3).

2. Pince à sertir selon la revendication 1, **caractérisée en ce qu'**une matrice de pressage (23, 24) peut être déplacée perpendiculairement à l'axe de rotation (y) au moyen d'une roue dentée (29, 30).

3. Pince à sertir selon l'une des revendications précédentes, **caractérisée en ce qu'**une matrice de pressage (23, 24) peut être déplacée au moyen d'une roue dentée (29, 30) d'une première position de pressage assurée par complémentarité de forme à une deuxième position de pressage assurée par complémentarité de forme.

4. Pince à sertir selon l'une des revendications précédentes, **caractérisée en ce que** pour déplacer un autre creux de pressage (27, 28) dans une position de travail, une matrice de pressage (23, 24) peut être réglée par action d'un engrenage à l'encontre d'une force sollicitant la matrice de pressage (23, 24) dans une position de travail assurée par complémentarité de forme, dans un mouvement perpendiculaire à son axe de rotation (y).

5. Pince à sertir selon l'une des revendications précédentes, **caractérisée en ce que** chaque matrice de pressage (23, 24) peut être réglée par l'intermédiaire d'une roue de réglage (68, 69) couplée cinématiquement à cette dernière, la roue de réglage (68, 69) et la matrice de pressage (23, 24) présentant des axes de rotation (y, z) différents.

6. Pince à sertir selon la revendication 5, **caractérisée en ce que** les axes de rotation (y, z) sont parallèles entre eux.

7. Pince à sertir selon l'une des revendications 5 ou 6, **caractérisée en ce qu'**une mâchoire de pressage (2, 3) présente une direction longitudinale, allant d'une charnière du côté de la poignée à une extrémité libre, et **en ce que** les axes de rotation (y, z) sont décalés entre eux en direction longitudinale.

8. Pince à sertir selon l'une des revendications 5 à 7, **caractérisée en ce que** la roue de réglage (68, 69) agit sur la matrice de pressage (23, 24) par le biais d'une roue dentée (29, 30).

9. Pince à sertir selon l'une des revendications 5 à 8, **caractérisée en ce que** la matrice de pressage (23, 24) peut tourner autour d'un axe fixe (25, 26).

10. Pince à sertir selon l'une quelconque des revendications 5 à 9, **caractérisée en ce que** la matrice de pressage (23, 24) est fixée dans une position de pressage par une coopération à complémentarité de forme avec un ressort (78), le ressort (78) étant de préférence un ressort à lame.

11. Pince à sertir selon la revendication 10, **caractérisée en ce que** le ressort (78) est supporté sur l'axe (17, 18) d'une roue dentée.

12. Pince à sertir selon l'une des revendications précédentes, **caractérisée en ce qu'**une ou les deux matrices de pressage (23, 24) peuvent être réglées au moyen d'une roue de réglage (68, 69), éventuellement avec interposition d'une roue dentée (29, 30), et **en ce qu'**une roue dentée (29, 30) et/ou la roue de réglage (68, 69) est réalisée de manière à pouvoir s'esquiver élastiquement complètement ou partiellement.

13. Pince à sertir selon la revendication 12, **caractérisée en ce que** la roue dentée (29, 30) et/ou la roue de réglage (68, 69) présente des dents de denture (80), un ou plusieurs groupes (81) de deux dents de denture ou plus (80) étant formés, dans lequel en outre les dents de denture (80) d'un groupe (81) sont formées sur un élément de support commun (82) et l'élément de support (82) est relié au moyen d'une branche élastique unique à une zone radialement intérieure (84) de la roue dentée (29, 30) ou de la roue de réglage (68, 69).

14. Pince à sertir selon la revendication 13, **caractérisée en ce que** la branche (83) est reliée, de manière excentrée dans la direction circonférentielle, à l'élément de maintien (82).

15. Pince à sertir selon l'une des revendications 13 ou 14, **caractérisée en ce que** trois, quatre ou plus de dents de denture (80) sont formées sur l'élément de maintien (82).
